# EUROPEAN PATENT APPLICATION

(11) **EP 3 872 726 A1**
(43) Date of publication of application: **01.09.2021**
(21) Application number: 20159654.1
(22) Date of filing: 26.02.2020
(51) Int. Cl.: G06Q 10/10

(54) **MESSAGING CAMPAIGN MANAGER, MESSAGING CAMPAIGN MANAGER SYSTEM, BULK OR MASS MESSAGING SYSTEM, METHOD OF BULK OR MASS MESSAGING, COMPUTER PROGRAM, COMPUTER-READABLE MEDIUM, GRAPHICAL USER INTERFACE**

(71) Applicant: Webtext Holdings Limited, D6W F729 Dublin (IE)
(72) Inventor: Keating, Colm, Sandycove (IE); Cahill, AJ, Salthill (IE); O'Dea, David, Claregalway, H91 DD3C (IE); Byrne, Diarmuid, Ballyhaunis (IE); Novak, Maya, Galway (IE); Ocelic, Davor, 51410 Opatija (HR)
(74) Representative: McCoo, Elaine

(57) **Abstract**

A Messaging Campaign Manager (8a 8b 8c 8d 8e), MCM, suitable for bulk or mass messaging, comprising :-
a first virtual private server (9), VPSA, configured capable of receiving (36a) an input message of a user,
a second virtual private server (10), VPSB, the VPSB comprising :-
a handlers and controllers module (32), H&C, configured to route (36b to 36g) the input message through the MCM during processing to output, and arranged cooperatively with,
a data sources connector (34), DSC, configured to provide the H&C module with process data, relating to the input message, from at least one source, and,
a campaign manager (33), CM, comprising a rules engine (33b), RE, configured to apply at least one rule to the input message, and,

a first database server (11), DBA, configured to store at least one rule for provision to the rules engine, RE (33b) and arranged as accessible (37) by the DSC (34).

A Messaging Campaign Manager System, MCM system (14 20), comprising one MCM (8a 8b 8c 8d 8e) or a plurality of MCMs, arranged as comprised in a virtual private cloud, VPC (15).

A bulk or mass messaging system comprising at least one MCM (8a 8b 8c 8d 8e) or at least one MCM system (14 20).

Method of bulk or mass messaging. A computer program and computer-readable medium for implementation of the method. A graphical user interface, GUI.

## Description

### FIELD OF THE INVENTION

The invention relates to the field of SMS messaging, particularly to SMS messaging for sending a message to a number of recipients, optionally tailored to each recipient.

### BACKGROUND OF THE INVENTION

Messaging systems currently exist for the sending of bulk or mass messages, particularly SMS (short message service) mass messages, to recipients. These systems permit automation of sending a (potentially large) number of messages from one user or client, providing convenience and speed of messaging to an extended audience. These bulk or mass messages comprise at least one message which is sent to a plurality of recipients. The bulk or mass messages may be tailored to each recipient, for example by personalising a greeting, or specifically comprising the name of the recipient, or comprising details specific to the recipient, such as a time of an appointment. The messages may comprise e.g. outbound campaigns from a business (or Enterprise), notifications, advertising or marketing, information etc.

Currently, some of the conventional messaging systems are capable of processing a reply to the bulk or mass message from one or more of the recipients, handled in a way such that the information from a particular recipient can be accurately associated with said recipient. For example, if a recipient receives a message concerning an appointment, an option may exist to reply with a yes or a no, to confirm attendance at the appointment or not.

Examples of conventional messaging systems, capable of bulk messaging, include ; Adobe Campaign Manager (CM), Avaya Proactive Outreach Manager (POM), SwampFox Outbound Campaign Manager (OCM), Acqueon List and Campaign Manager (LCM) or Acqueon Outbound Campaign Manager (OCM).

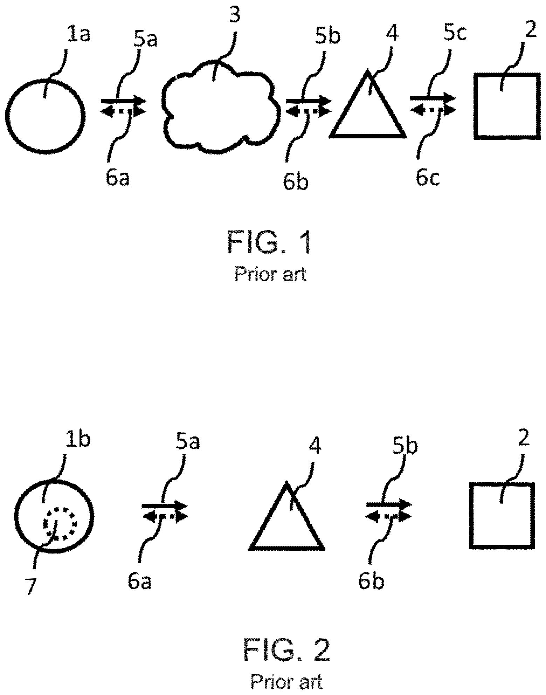

The messaging systems comprised in the art may include hardware and software elements. A message to be sent from a first device (of a sender) to a second device (of a recipient) may be routed via one or more intermediate systems or devices. The first device may comprise e.g. a business system, used by an Enterprise or business, or other device of a client, or user, of the messaging system. The second device may comprise e.g. a mobile device, a laptop or computing device, of another business or Enterprise system or person. FIG. 1 and FIG. 2 schematically illustrate two possible routings for a message. These figures are described in detail later. As shown in FIG. 1, a mass message (or more than one mass message) may be composed by a user of the first device and directed to a website or cloud of the messaging system. Here, the messaging system may assess the mass message and redirect it to an appropriate provider of a service to which the second device of the recipient is subscribed. Adobe Campaign Manager is an example of this kind of service. Alternatively, the mass message may be sent directly to a provider associated with the recipient, having (optionally) been configured at the first device of the user, as shown in FIG. 2. Avaya Proactive Outreach Manager (POM), SwampFox OCM and Acqueon LCM are examples of this kind of service.

The systems, as shown schematically in FIG. 1 and FIG. 2, are described in the art as being capable of receiving reply messages back from the second device or from the recipient. These known systems are also indicated capable of bulk or mass messaging. Some of these systems may support voice calls, voice messaging, automated voice services, email or another type of messaging, such as MMS (multimedia messaging service). However, some other systems are very restricted, for example to emails, and SMS only.

More detailed description of the art will be made in relation to the aforementioned figures, i.e. FIG. 1 and FIG. 2, below.

The messaging systems of the art comprise a number of drawbacks. These include limitation to hardware aspects of the systems in terms of installation, maintenance, upgradability and scalability. Additionally, such systems are limited with regard to the assessment logic and processes which may be applied to outgoing messages or incoming messages from a recipient. The handling or processing of an assessed reply message may be further restricted by limitations on e.g. escalation processes or forwarding. The art is restricted to offering only escalation or forwarding of incoming messages to their own proprietary systems. This may be limiting and problematic.

The above limitations severely impact the ability of a bulk message originator (e.g. a user) to setup and subsequently operate an efficient, high throughput and multi-channel campaign to serve their message recipients, e.g. their customers. (A channel in this context can refer to SMS or other forms of messaging, relating as much to the format of a message as to the route taken, comprising an end point or destination, e.g. at a recipient, and a message flow). Particularly, should the originator be a business or Enterprise, it is expected by customers that interaction with the business should be possible via an increasing number of channels, communication means or mechanisms. In turn, these channels or communication means or mechanisms may, themselves, present with vastly varied ways of receiving incoming communications. Enterprises recognize that due to the fractured nature of these differing channels it can often result in poor experiences for their customers, affecting relationships in a negative way and culminating in poor relations between Enterprise and customer. Ultimately, this results in negative impact(s) to the Enterprise's performance and eventual loss of potential earnings. It is imperative that the Enterprise have the possibility to efficiently and accurately be able to communicate directly with their customers with minimum effort in a group manner, especially towards larger numbers of customers. It is equally imperative that the Enterprise (or user) be able to direct inbound communications from their customers to the appropriate teams and platform required. Sending out bulk or mass messages without the ability to easily handle (a suitably large number of) any necessary responses, is futile. A technical solution to overcome the practical difficulties of effecting efficient and optimised (bulk or mass) messaging is, thus, needed.

### SUMMARY OF THE INVENTION

The present invention seeks to address the optimisation of processing bulk or mass message(s) through a messaging system, in an efficient and accurate manner, to a recipient. Additionally, the present invention further seeks to provide appropriate and optimised capability to handle any resulting reply messages which may arise from the send process, or other inbound messages to the messaging system, preferably in a manner desired by the sender of the initiating, original, bulk or mass message(s).

According to a first aspect of the present invention, there is provided a Messaging Campaign Manager, MCM, suitable for bulk or mass messaging, comprising :-
a first virtual private server, VPSA, configured capable of receiving an input message of a user,
a second virtual private server, VPSB, the VPSB comprising :-
   a handlers and controllers module, H&C, configured to route the input message through the MCM during processing to output, and arranged cooperatively with,
   a data sources connector, DSC, configured to provide the H&C module with process data, relating to the input message, from at least one source, and,
   a campaign manager, CM, comprising a rules engine, RE, configured to apply at least one rule to the input message, and,
a first database server, DBA, configured to store at least one rule for provision to the RE and arranged as accessible by the DSC.

Advantageously, the MCM facilitates the processing of a bulk or mass message according to user defined instruction through a rule-led procedure, including the output of a processed message, suitable for delivery.

Advantageously, the MCM device (or instance) is particularly suitable for ultra-high throughout campaigns. Here, ultra-high throughput refers to a normal achievable operational throughput (or capacity) of around 75,000 messages per hour (which can be bi-directional), or 1,800,000 messages per day, or 21 messages per second.

Preferably, the MCM operates on fully cloud-based architecture. Consequently, this is advantageous in response to rising capacity requirements, as the resources available to the MCM can be scaled upwards easily and rapidly. In practical terms this can mean scaling up the implementation means for operation of the MCM. Such scaling provides virtually limitless capacity, as opposed to that available by means of dedicated hardware, usually situated at the side, or site, of the user.

Optionally, the MCM is configured to receive the input message and/or a user instruction via a graphical user interface, GUI, that is accessible via a web-portal or a front-end or client-side application, optionally located on a first device associated with the user,
wherein the user instruction specifies a rule applied to the input message or bulk or mass message processed by the MCM, and/or,
wherein the web-portal or the front-end or client-side application is administered or maintained by a provider of the MCM.

Advantageously, this facilitates easy access to a user from a first device and convenient, easily understood, tools for forming or editing a mass message where required.

Optionally, the MCM is configured such that the first virtual private server, VPSA, further comprises the graphical user interface, GUI, and/or an input, configured to facilitate input of the input message or user instruction by the user, and/or wherein the first virtual private, VPSA, is comprised in the second virtual private server, VSPB.

Advantageously, the GUI allows the user to directly access the MCM, removing the need for the user to have hardware or software related to the MCM functionality on a first device or an associated dedicated application.

Optionally, the MCM further comprises :-
a second database server DBB, configured to comprise a backup copy of the first database server, DBA, and/or,
a bulk storage server, BS, configured to store MCM data accessed for normal operations of the MCM, further comprising back-ups and/or images and/or files.

Advantageously, this facilitates a more robust MCM operation and a broader scope of application.

Optionally, the MCM further comprises a customisable output, configured for message output in at least one predetermined format.

Advantageously, this permits output to be rendered suitable for a particular destination of device.

Optionally, the MCM further comprises a message queue.

Advantageously, the provision of a message queue facilitates autonomous operation of the MCM (or MCM system).

Optionally, the MCM further comprises at least one plug-in, said plug-in arranged as comprised in the MCM or configured as accessible to the MCM by network access.

Advantageously, the plug-in enables customisation, such as but not limited to, an extension to existing capabilities of the device, instance or program, the addition of a new feature(s) or upgrade(s), the reduction of the size of an application which must be installed on a main device, text editors, etc.

Optionally, the MCM further comprises a call back, CB, module comprised in the second virtual private server, VPSB, configured capable of processing at least one inbound message to the MCM, for forwarding to the CM,
the CB module optionally being further arranged to comprise parsing capability or at least one parser component, configured to inspect the at least one inbound message, and/or,
the CB module optionally being further configured to process at least one inbound message from a BOT or human operator.

Advantageously, the MCM comprises the ability to parse, route, and manipulate an original message with additional functionality such as masking (e.g. of private information such as credit card details or addresses) and routing of any reply messages away from the user or originator of the bulk or mass message. Additionally, routing in either send or receive directions can be facilitated with non-native systems.

According to a second aspect of the present invention, there is provided a Messaging Campaign Manager System, MCM system, comprising one MCM or a plurality of MCMs, as claimed in any preceding claim, arranged as comprised in a virtual private cloud, VPC.

Cloud-based implementation is particularly advantageous - for example, in terms of scalability and throughput. Known systems are confined by hardware-based implementations, in at least one aspect.

Optionally, the MCM system further comprises an outbound message module, OMM, for forwarding of MCM output as an outbound message to at least one recipient or second device.

Optionally, the MCM system further comprises an inbound message module, IMM, for receipt of a reply message to the MCM from a recipient or second device for forwarding to the call back, CB, module. Further optionally, the inbound message module, IMM, is arranged to comprise a message transfer node, MTN.

Optionally, the MCM system further comprises a multimedia messaging gateway, MMSGW.

Advantageously, these features provide means by which e.g. a user or Enterprise can process incoming replies from customers based on the user or Enterprise's pre-defined, fully-customized logical rules and conditions. Furthermore, the features provided facilitate the forwarding or transfer of replies to a multitude of integrated external connections - be those contact centres, data-stores or other systems capable of receiving inbound communications. There is also the option of formatting communications in a particular way or to a particular known standard for said communication.

Optionally, the MCM system further comprises a first device, the first device comprising a graphical user interface, GUI, suitable for receiving input from a user of the first device for configuration of an input message to be processed by the MCM or a user instruction, wherein the graphical user interface, GUI, is accessible via a web-portal or a front-end or client-side application, and/or,
wherein the user instruction specifies a rule applied to the outbound message or bulk or mass message(s) processed by the MCM system, and/or,
wherein the web-portal or the front-end or client-side application is administered or maintained by a provider of the MCM system.

According to a third aspect of the present invention, there is provided a bulk or mass messaging system comprising at least one MCM or at least one MCM system.

According to a fourth aspect of the present invention, there is provided a method of bulk or mass messaging, comprising the steps of :-
receiving an input message of a user, by means of a first virtual private server, VPSA, of a Messaging Campaign Manager, MCM;
modifying the input message by means of a second virtual private server, VPSB, by :-
   routing the input message through the MCM during processing to output, by means of a handlers and controllers module, H&C,
   configuring a data sources connector, DSC, to provide the H&C module with process data, relating to the input message, from at least one source, and,
   applying at least one rule to the input message by means of a campaign manager, CM, comprising a rules engine, RE, said RE configured to apply the at least one rule; and,
storing at least one rule for provision to the RE by means of a first database server, DBA, accessible by the DSC.

Advantageously, the MCM facilitates the processing of a bulk or mass message according to user defined instruction through a rule-led procedure, including the output of a processed message, suitable for delivery.

Advantageously, the MCM device (or instance) is particularly suitable for ultra-high throughout campaigns. Here, ultra-high throughput refers to a normal achievable operational throughput (or capacity) of around 75,000 messages per hour (which can be bi-directional), or 1,800,000 messages per day, or 21 messages per second.

Preferably, the MCM operates on fully cloud-based architecture. Consequently, this is advantageous in response to rising capacity requirements, as the resources available to the MCM can be scaled upwards easily and rapidly. In practical terms this can mean scaling up the implementation means for operation of the MCM. Such scaling provides virtually limitless capacity, as opposed to that available by means of dedicated hardware, usually situated at the side, or site, of the user.

Optionally, the method includes the step of :-
configuring the MCM to receive the input message and/or a user instruction via a graphical user interface, GUI, that is accessible via a web-portal or a front- end or client-side application, optionally located on a first device associated with the user,
wherein the user instruction specifies a rule applied to the input message or bulk or mass message processed by the MCM, and/or,
wherein the web-portal or the front-end or client-side application is administered or maintained by a provider of the MCM.

Advantageously, this facilitates easy access to a user from a first device and convenient, easily understood, tools for forming or editing a mass message where required.

Optionally, the method includes the step of :-
arranging the first virtual private server, VPSA, to comprise the graphical user interface, GUI, and/or an input, configured to facilitate input of the input message or user instruction by the user and/or wherein the first virtual private server, VPSA, is comprised in the second virtual private server, VSPB.

Advantageously, the GUI allows the user to directly access the MCM, removing the need for the user to have hardware or software related to the MCM functionality on a first device or an associated dedicated application.

Optionally, the method includes the steps of :-
providing a second database server DBB, configured to comprise a backup copy of the first database server, DBA, and/or,
providing a bulk storage server, BS, configured to store MCM data accessed for normal operations of the MCM, further comprising back-ups and/or images and/or files.

Advantageously, this facilitates a more robust MCM operation and a broader scope of application.

Optionally, the method includes the step of :-
outputting an outbound message from the MCM in at least one predetermined format, by providing the MCM with a customisable output configured for message output in the at least one predetermined format.

Advantageously, this permits output to be rendered suitable for a particular destination of device.

Optionally, the method includes the step of :-
providing the MCM with a message queue.

Advantageously, the provision of a message queue facilitates autonomous operation of the MCM (or MCM system).

Optionally, the method includes the step of :-
arranging the MCM to further comprise at least one plug-in, said plug-in arranged as comprised in the MCM or configured as accessible to the MCM by network access.

Advantageously, the plug-in enables customisation, such as but not limited to, an extension to existing capabilities of the device, instance or program, the addition of a new feature(s) or upgrade(s), the reduction of the size of an application which must be installed on a main device, text editors, etc.

Optionally, the method includes the step of :-
processing at least one inbound message to the MCM, for forwarding to the CM, by arranging the MCM to further comprise a call back, CB, module comprised in the VPSB,
the CB module optionally being further arranged to comprise parsing capability or at least one parser component, configured to inspect the at least one inbound message, and/or,
the CB module optionally being further configured to process at least one inbound message from a BOT or human operator.

Advantageously, the MCM comprises the ability to parse, route, and manipulate an original message with additional functionality such as masking (e.g. of private information such as credit card details or addresses) and routing of any reply messages away from the user or originator of the bulk or mass message. Additionally, routing in either send or receive directions can be facilitated with non-native systems.

Optionally, the method includes the step of :-
arranging a virtual private cloud, VPC, to comprise one MCM or a plurality of MCMs.

Cloud-based implementation is particularly advantageous - for example, in terms of scalability and throughput. Known systems are confined by hardware-based implementations, in at least one aspect.

Optionally, the method includes at least one of the step(s) of :-
forwarding MCM output as an outbound message to at least one recipient or second device, by means of an outbound message module, OMM; and/or,
receiving a reply message to the MCM from a recipient or second device for forwarding to the call back, CB, module, by means of an inbound message module, IMM, said inbound message module, IMM, optionally comprising a message transfer node, MTN.

Advantageously, these features provide means by which e.g. a user or Enterprise can process incoming replies from customers based on the user or Enterprise's pre-defined, fully-customized logical rules and conditions. Furthermore, the features provided facilitate the forwarding or transfer of replies to a multitude of integrated external connections - be those contact centres, data-stores or other systems capable of receiving inbound communications. There is also the option of formatting communications in a particular way or to a particular known standard for said communication.

According to a fifth aspect of the present invention, there is provided a computer program comprising instructions which, when the program is executed by a computer, cause the computer to carry out the steps of the method.

According to a sixth aspect of the present invention, there is provided a computer-readable medium comprising instruction which, when executed by a computer, cause the computer to carry out the steps of the method.

According to a seventh aspect of the present invention, there is provided a graphical user interface, displayed on a computer screen of a first device, for receiving user input, suitable for configuration of a bulk message by a MCM, said graphical user interface comprising :-
at least a first region, said first region, upon activation, performing an action associated with receiving the user input suitable for configuration of the bulk message; and,
a second region, said second region, upon activation, performing an action associated with the sending of the user input to the MCM; and/or,
a third region, said third region, upon activation, performing an action of displaying reply messages and/or status information and/or process data obtained from the MCM.

Advantageously, the GUI allows the user to directly access the MCM, removing the need for the user to have hardware or software related to the MCM functionality on a first device or an associated dedicated application.

### BRIEF DESCRIPTION OF THE DRAWINGS

The various embodiments of the present invention will now be described in more detail by reference to the figures. These examples are for illustrative purposes and should not be considered as limiting. Where reference numerals indicate a specific feature which is consistent across the figures, the associated reference numeral is kept similarly consistent.
**FIG. 1** illustrates, schematically, an example of a conventional messaging system, capable of bulk or mass messaging, comprising a website intermediary cooperating with a messaging provider.
**FIG. 2** illustrates, schematically, an example of a conventional messaging system, capable of bulk or mass messaging, comprising a messaging provider only.
**FIG. 3** **(a and b)** illustrates, schematically, a Messaging Campaign Manager according to embodiments of the present invention.
**FIG. 4** illustrates, schematically, a MCM system comprising multiple MCM instances, according to an embodiment of the present invention.
**FIG. 5** illustrates, schematically, a MCM according to an embodiment of the present invention, which further comprises a customisable output.
**FIG. 6** illustrates, schematically, a MCM capable of autonomous operation, according to an embodiment of the present invention.
**FIG. 7** **(a and b)** illustrates, schematically, a MCM configured to cooperate with a plug-in, according to embodiments of the present invention.
**FIG. 8** **(a and b)** schematically illustrates a MCM system for processing a (bulk or mass) message(s) originating from a first device of a user for sending to a second device of a message recipient, which system comprises an MCM, according to an embodiment of the present invention.
**FIG. 9** **(a and b)** illustrates, schematically, a MCM device or instance (comprised in a MCM system, not shown) arranged cooperatively with a message transfer node MTN, according to embodiments of the present invention.
**FIG. 10** illustrates, schematically, a MCM device or instance (comprised in a MCM system, not shown) arranged cooperatively with a multimedia messaging service gateway (MMSGW), according to an embodiment of the present invention.
**FIG. 11** illustrates, schematically, details of modules or subcomponents and process flow of a preferred embodiment of an MCM system comprising a single MCM device or instance and which further incorporates an outbound message module and an inbound message module as components of the system, the system being suitable for facilitating bulk messaging from a first device of a user to a second device of a recipient.
**FIG. 12** is an illustration of a block diagram of a computing apparatus suitable for implementing and practicing aspects of the disclosed embodiments of the present invention.
**FIG. 13** illustrates, schematically, a navigation hierarchy of a graphical user interface (GUI) according to an embodiment of the present invention.
**FIG. 14** illustrates, schematically, a preferred interface screen template of the GUI, according to an embodiment of the present invention.
**FIG. 15** **(a to c)** shows a plurality of screenshot examples of preferred interface screens according to embodiments of the present invention.
**FIG. 16** illustrates a method of bulk or mass messaging according to an embodiment of the present invention, comprising processing of an input message from a user by an MCM.
**FIG. 17** illustrates a method of bulk or mass messaging according to an embodiment of the present invention, comprising processing of an inbound message to the MCM by means of a Call Back module.

A Messaging Campaign Manager (MCM) according to the provisions of the embodiments of the present invention is a device, or instance, to facilitate the construction, deployment, delivery and on-going management of high throughput, multi-channel campaigns. The MCM is described herein in terms of SMS messaging but this should not be considered as limiting. The MCM is applicable to other types of messaging, such as MMS, Facebook messaging etc. An advantage of the MCM is that it can be configured to handle many different types of messaging. This provides a wide range of output possibilities from the MCM to a wide range of providers or recipients. The MCM can also be configured to comprise adherence to many different formats, programming languages, protocols, communication standards etc. which may be inherent in different types of messaging. Further advantageously, the MCM facilitates extensive handling of replies to any delivered messages from one or more recipients.

A MCM (device or instance) is particularly suitable for SMS messaging.

As previously indicated, the art is restricted to offering only escalation or forwarding of incoming messages to their own proprietary systems. This may be limiting and problematic. Conversely, the MCM can enable connection to a plurality of third-party systems, said third party systems being capable of accepting incoming messages with the purpose of forwarding or escalating, be that to a human agent or to a further programmatic system (e.g. BOT). The ability of the MCM to escalate or forward to third party systems beyond what is offered by the provider of the art, is highly beneficial and advantageous, as it removes the restriction or reliance on certain proprietary systems. Such an ability may be utilised when constructing any set of rules which shall apply to incoming messages as part of the MCM processing. An example of one such rule may be the escalation or forwarding, as described.

Additionally, the MCM can act cooperatively with other components of a system in order to provide additional services e.g. extra processing of a message or special delivery requirements (e.g. language or format tailored to a device to which the message must be delivered or specific timing). For example, the MCM can act cooperatively with a Message Transfer Node (MTN) or Message Transfer System (MTS) or Multi-Media Messaging Service Gateway (MMSMG), these being described in, e.g. patent applications PCT/IB2017/051548 (MTN and MTS) and PCT/US2016/037592 (MMSGW). Examples of said cooperation will be described later.

The MCM is especially suited to the needs of business or Enterprise users. Enterprises, including (but not limited to) examples such as businesses, government organisations, clubs, social networks, call centres etc. have reacted to the changing technologies by ensuring their presence and availability to a user in a variety of ways, including various communication options. Enterprises frequently provide chat services, voice call services, email capability, social media presence e.g. Facebook and Twitter accounts, dedicated websites or web portals, in order to interact with the user. Indeed, the public at large now anticipate at least one or more of such services to be present by default and the Enterprise gains advantage by providing a plurality of communication options. In the context of this application, we refer to Enterprises, (defined according to common usage) as businesses or companies or other related entrepreneurial activities. For example, SME's (small to medium sized Enterprises) are generally referred to as small to medium sized Enterprises, dependent on the company size or business financial turnover. Enterprises may also be considered as any group or organization providing services to customers, with whom it may wish to communicate through a variety of disparate channels or communication types. In particular, this communication may comprise automated messaging, person-to-person messaging, or a combination of the two.

Current provision of such a broad range of services and communication possibilities does present difficulties, however, not only to the Enterprise but also to the user. In order to access a dedicated website belonging to an Enterprise, the user relies on access to an application (APP) present on whatever device is available to them e.g. a mobile device or computer. The user device normally comprises an application programming interface (API) with which the APP is cooperative. In another common arrangement, the APP may poll directly, for information or contact or connection with other devices outside the environment of the user device, such that the APP is in direct contact with the outside world beyond the user device. The APP then facilitates particular functionality, often associated with a particular Enterprise. Examples of APP's for web browsing include, for example, Safari or Explorer. Frequently, the user will want to use a mobile device, such as a smart phone, so as to collect information as easily as possible, on the move, or to retain everything on one device which is usually present with them. In order to access a different kind of information, such as a Facebook account of the Enterprise, the user must have a Facebook application (Facebook APP) installed on their mobile device. Most mobile devices comprise capability or applications (APP's) for various forms of direct communication, such as text messaging (e.g. SMS, MMS, Messenger) or web chat or voice call. Most Enterprises will have similar provisions at their side to allow interaction. In some cases, the Enterprises comprise contact centres, which facilitate different links of communication with options for chat, messaging and/or email. A provision for call back to a user if the Enterprise is busy, is frequently a further option.

**FIG. 1** and **FIG. 2** illustrate, schematically, examples of conventional messaging systems capable of bulk or mass messaging. Specifically, FIG. 1 illustrates an example of a conventional messaging system, capable of bulk or mass messaging, comprising a website intermediary cooperating with a messaging provider. This type of art can provide a more flexible approach to the handling of any message processing. FIG. 2 illustrates an example of a conventional messaging system, capable of bulk or mass messaging, comprising a messaging provider only. Adobe Campaign Manager is an example of the kind of service shown in FIG. 1. Alternatively, the mass message may be sent directly to a provider associated with the recipient, as shown in FIG. 2. Avaya Proactive Outreach Manager (POM), SwampFox OCM and Acqueon LCM are examples of this kind of service.

FIG. 1 shows, schematically, a first device **1a** of an Enterprise, client (or user) from which a first message intended for mass distribution originates (or at least intended for a recipient associated with a second device **2**), a website or cloud-based manager **3** comprising a component or process for applying assessment logic to the message, a service provider **4** to which the website **3** can direct a processed message intended for an end user or customer of the Enterprise, for delivery of the message to a second device **2** associated with the end user. The figure shows a simplified example where one, single, message originates from the first device **1a** and is processed to a second device **2**, for clarity. This is indicated by the solid arrows **5a 5b 5c.** It is also possible that a plurality of first messages are sent to the website for processing, optionally as a batch, each with different end users or processing requirements. The website or cloud-based manager **3** processes the first message for delivery to a plurality of end users, may tailor the message to personalise the content to the end user and may direct the processed messages to a plurality of providers, each of which is associated with at least one intended end user. Should the end user(s) respond, the response message from the associated second device **2** may be directed back through the provider **4** and website **3** to the first device **1a** associated with the user, resulting in sending and response, as indicated by the dashed arrows **6a 6b 6c.**

An example of the website or cloud of FIG. 1 in the art would be Adobe CM. Adobe CM may accommodate multi-channel messaging e.g. email, SMS, direct mail.

Similarly, FIG. 2 shows messaging achieved by means of a service provider **4** as the intermediary between the first **1b** and second **2** devices, the message flow being indicated by arrows **5a 5b.** These providers are capable of returning message(s) from the second device - dashed arrows **6a 6b.** In these examples, any component or process for applying assessment logic to the message is implemented at the side of the first (user) device **1b**, for example as software process or hardware components before the message for bulk communication is sent to the provider **4.** In FIG. 2, the first device **1b** can be provided with an input APP (application) **7** for forming the message.

Examples of the provider **4** (and message processing) of FIG. 2 in the art would be Avaya POM, SwampFox OCM, or Acqueon LCM. These systems comprise facilities at the side of the first device **1b** which allow a message to be tailored before sending to the provider **4** for (mass) distribution.

Limitations of such systems available in the current art include :-
- Hardware/installation:
   ∘ Current systems require dedicated and physical hardware to be installed on premise. Such hardware is complex in its configuration and maintenance.
   ∘ A significant cost is associated with the necessary hardware installation and maintenance.
   ∘ Such installations then require further resources in the form of skilled staff to maintain, operate and upgrade.
- External third-party connections:
   ∘ Current systems are restricted to connecting to their own proprietary systems for escalation or forwarding of incoming message replies.
   ∘ There is no facility for current systems to integrate with third party contact centres and their respective technologies e.g. the ability to forward incoming replies to other contact centres not owned and operated by that company.
- Message throughput/capacity:
   ∘ Typically, current systems are limited to a maximum, bi-directional and hourly throughput of approximately 3,200 messages per hour.

For example, Avaya POM is limited in capacity and speed by the nature of the architectural infrastructure of the system. Dedicated hardware (i.e. physical systems) comprises an inherent response depending on characteristics of components, such as CPU (central processing unit), RAM (random access memory), Bandwidth and the like.

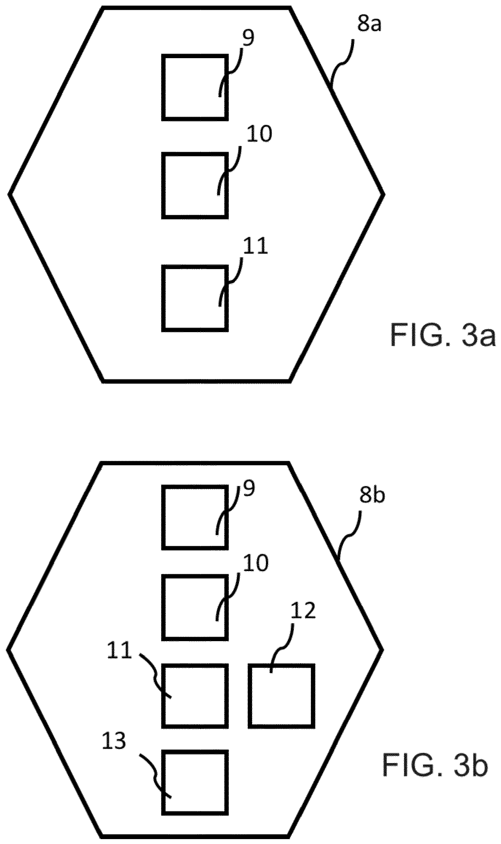

**FIG. 3** **(a and b)** illustrates, schematically, a Messaging Campaign Manager **8a 8b** according to embodiments of the present invention.

MCM (Messaging Campaign Manager) **8a 8b** is a device (or instance) built to facilitate the construction, deployment, delivery and on-going management of e.g. multi-channel SMS campaigns. The device (or instance) is particularly suitable for ultra-high throughout campaigns. Here, ultra-high throughput refers to a normal achievable operational throughput (or capacity) of around 75,000 messages per hour (which can be bi-directional **6a 6b 6c**), or 1,800,000 messages per day, or 21 messages per second. By comparison, systems in the art, such as Avaya POM are indicated to handle 3,200 messages per hour, while Adobe CM may achieve 8,300 messages per hour or 200,000 inbound interactions per day. Adobe CM may also be limited by package or license restrictions which act to limit the technically available throughput.

Preferably, the MCM operates on fully cloud-based architecture. Consequently, this is advantageous in response to rising capacity requirements, as the resources available to the MCM can be scaled upwards easily and rapidly. In practical terms this can mean scaling up the implementation means for operation of the MCM. Such scaling provides virtually limitless capacity, as opposed to that available by means of dedicated hardware, usually situated at the side, or site, of the (first) user.

One or more MCM instances can be installed on any cloud provider, preferably a cloud administered and controlled by the MCM provider, or alternatively on a third-party cloud administered e.g. by Amazon or on a cloud associated with user or client premises. The cloud comprises a server at a different location from the user (near or far). The MCM provides tenancy to a user, with at least one MCM instance per user, known as 'single tenancy' or multiple MCM's to the user, known as 'multi-tenancy'. The provision of database(s) and application(s) APP(s) and Rules Engine(s) RE(s) to the MCM instance(s), provided in a secure VPC for a user, facilitate the rule-based activity and operations of the MCM message processing.

In this illustrative embodiment, the MCM **8a 8b** shown in FIG. 3 (a and b) facilitates a user e.g. an Enterprise or business (not shown), to deploy customised campaigns capable of providing a consistent throughput of 75,000 (bi-directional) messages per hour on a constant basis, if required. The MCM **8a 8b** architecture can comprise a plurality of inter-connected microservices, processes or components and is, preferably, entirely cloud based. Such architecture allows for minimal capital expenditure by a user and requires minimal or no specialized hardware installations by the user. The device can be embodied as an internet connected web browser. This can provide easy access to a user from a first device and convenient, easily understood, tools for forming or editing a mass message where required.

The MCM enables Enterprises (users) to interact with their customers or clients in a customized, user-centric and automated fashion. The MCM e.g. provides the Enterprise a means by which they can process incoming replies from customers based on the Enterprise's pre-defined, fully-customized logical rules and conditions. Furthermore, the MCM facilitates the forwarding or transfer of replies to a multitude of integrated external connections - be those contact centres, data-stores or other systems capable of receiving inbound communications. MCM is not limited to simply communicating with proprietary, first party software owned by the Enterprise, business or company. Instead the MCM provides unparalleled access to the most widely used contact centre software and processes offered by major industry leaders.

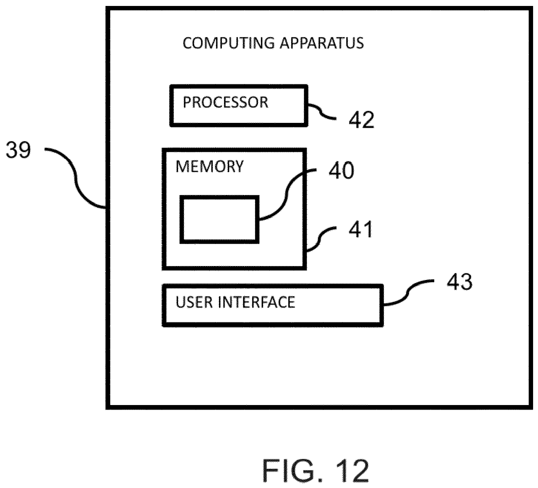

The MCM is preferably cloud based but may also be implemented by computing apparatus, as shown in FIG. 12.

Referring now to **FIG. 3a**, the MCM **8a 8b** comprises hardware architecture configured to operate based on a cloud infrastructure. The device (or instance) **8a 8b** may preferably comprise a centralised nature, for ease of provisioning. However, it is also possible for the MCM **8a 8b** to be distributed across different devices or servers.

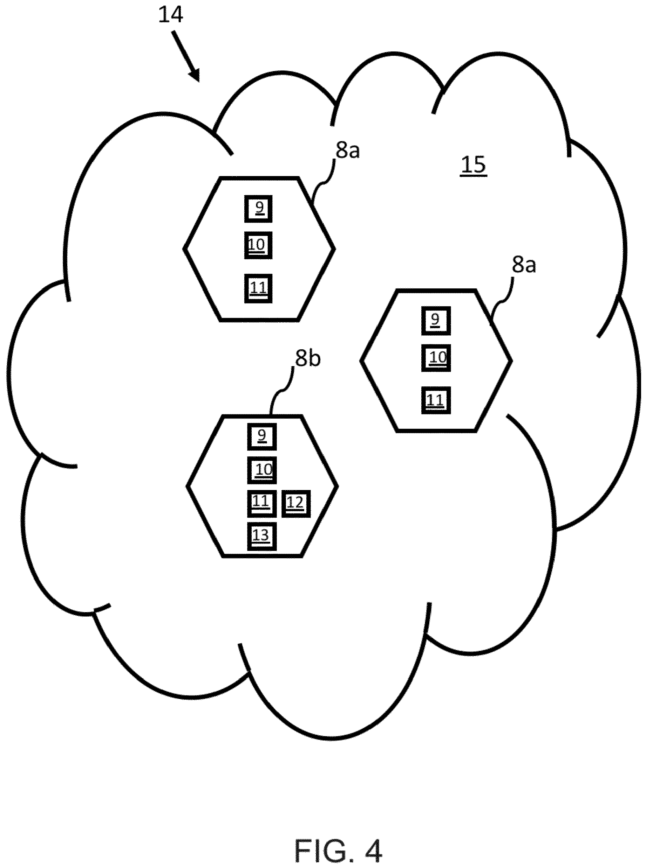

Each instance of the MCM **8a 8b** is preferably related to a particular user, and is restricted to its own Virtual Private Cloud (VPC). (The VPC is not shown in FIG. 3a and FIG. 3b, see e.g. FIG. 4 **15** later). Should a user be associated with more than one MCM instance, all these instances are preferably contained in the VPC which is restricted to that user. The VPC provides an isolated network within which all devices or instances needed for the system are configured to operate, within a self-contained, secure environment. Advantageously, this affords the MCM **8a 8b** instance optimal security by controlling access to each of its components and by the ability to filter and determine any required network connections. Additionally, within a VPC, fluctuations in messaging demand can be easily accommodated by scaling up by adding more instances of the MCM - this will be discussed later in relation to FIG. 4. Alternatively, more than one VPC can be provided, each with its own associated MCM. This can be done for a single user, or for a plurality of different users. The VPC is preferably maintained by the business provider of the MCM, for security. Advantageously, a dedicated MCM per user (or customer) can be provided, thereby overcoming a deficiency of the art, e.g. Adobe CM, where a single cloud-based service is common to all users.

Components of the MCM reside inside the VPC and are configured to communicate over private sub-networks or subnets. Such subnets are not accessible to external communication but, instead, communicate with the (hardware) components within the VPC and according to security policies defined on a per component/instance level, said polices comprising at least inbound and outbound rules.

The MCM **8a** comprises of FIG. 3a comprises :-
a (first) Virtual Private Server A (VPSA) **9**, configured to serve e.g. a customer facing user interface or to provide an input to the MCM or to accommodate a GUI located on the MCM or website (not shown), or other means through which the user can interact with the MCM,
a (second) Virtual Private Server B (VPSB) **10**, comprising logical processing instances for implementing the functionality of the MCM, and,
a (first) database server A (DBA) **11**, comprising a 'master' data store for the MCM, the master data store arranged to store the application data necessary for the functioning of the MCM. Regularly accessed and/or locally stored data related to this specific MCM instance can also be stored in DBA. Data refers to e.g. information relating to campaigns (such as contact details and lists), contact rules, rules logic, outbound and inbound message storage, campaign meta data, statistic reports, etc.

Use of the VPSA **9** to locate a GUI for user access to the functionality of the MCM is advantageous to the user, as no special hardware or software is required by the user. The VPSA **9** is not restricted to only a GUI or only an input but can also comprise a combination of options, e.g. input and GUI located on the VPSA, providing two options for the user, or more options if desired. The input can comprise an endpoint for a GUI not located on the MCM itself, e.g. located on a first device **1a 1b** of a user, facilitating access to the MCM functionality and VPSB **10.** The GUI or customer facing user interface can, alternatively, be located on a first device **1a 1b** associated with the user or software associated with the MCM instance, e.g. an input application (APP), as discussed later, can be provided on the first device **1a 1b.** The GUI or customer facing user interface or APP assists the user in performing the technical task of input to the MCM by means of a human-machine or human-instance interaction process. The VPSA **9** may be comprised in the VPSB **10**, if desired.

Preferably, VPSA and/or VPSB are arranged to run on a Linux operating system, including the Ubuntu distribution. Ubuntu 18.04 is preferred. The operating system (OS) supports the Virtual Private Servers (VPSA **9** and VPSB **10**) where front and back end application code can reside.

In the context of the MCM described herein, a server is defined interchangeably in terms of hardware components and/or cloud-based components. A server is usually defined as a computing device configured to provide functionality to other computing devices, which may initiate a connection to it whilst also providing input. A device which initiates such communication with a server is usually known as the 'client'. In the context of the MCM, a client-server model can describe one possible method of communication between the MCM and its source of input. This should not be considered as limiting, however. Generally, a server can be further categorised according to its specific, required function. For example, a database-server (e.g. DBA **11**) is a server with the capability and/or objective of storing and allowing retrieval of data. An application server is a server configured to provide the ability to process inputs, execute functionality and return outputs or information. A web-server is a server with the objective of accepting incoming HTTP network connections and rendering web-pages containing information generated by the application server. These web-pages are rendered on the device or client.

MCM application servers (VPSA **9**/VPSB **10**) host all the necessary application code and logic. Configuration : capable of receiving input from the client, processing the input according to its contained application logic, completing desired actions based on such logic and subsequently returning an output or response to the originating client. During the execution of their operations, servers may communicate to other connected servers in order to complete tasks, such as but not limited to, gathering data-sources or executing further actions. Cloud based servers, which are those that are preferably utilised or comprised within the MCM architecture, refer to servers created using virtualisation software. This is as opposed to non-cloud-based servers, which comprise servers that reside solely on physical hardware devices.

In an alternative embodiment of the present invention, the VPSA **9** is replaced by an input module, optionally comprising an API (application programming interface), located on VPSB **10.**

Optionally, as shown in **FIG. 3b**, the MCM **8b** can comprise additional components :-
a (second) database server B (DBB) **12**, configured to comprise a copy of all data held on the master database (DBA), e.g. for backup purposes or for reference for speed of operation, and/or,
a block or bulk storage server (BS) **13**, where data which is not regularly needed or accessed for normal operations of the MCM can be stored, such as back-ups, asset storage such as images or files. (The bulk storage server may be used to hold data needed in the event of autonomous operation of the MCM, such as account information for a user. For example, if connection to other system components is lost unexpectedly or autonomous operation is scheduled - see later for further discussion of autonomous MCM operation).

The MCM receives input or instruction, e.g. from a first device **1a 1b** or means associated with a user of the MCM application (not shown), including the mass message to be distributed. This is received by VPSA **9** across an internet connection to the MCM from the first device (not shown). Processing of the message for bulk distribution occurs at the MCM (predominantly at VPSB **10**) and the various messages of the bulk sending are output (not shown) from the MCM towards the relevant providers or systems for distribution to a second device (not shown) associated with an individual recipient.
(Optionally, the MCM can comprise additional inputs (not shown), e.g. an input API located on the MCM instance itself. This may depend somewhat on the method chosen by the user of the first device **1a 1b** to interact with the MCM (system)).

**FIG. 4** illustrates, schematically, a MCM system **14** comprising multiple MCM instances **8a 8b.** In a preferred embodiment of the present invention, individual MCM instances do not communicate with each other. Each instance or defined group of instances can be dedicated to a particular user or customer. This provides additional security for the user. However, communication between individual MCM instances can be facilitated, if desired.

In the figure, three MCM instances **8a 8b** are shown. The illustrated combination of MCM instances and the number of said instances should not be considered as limiting, nor is it necessary to provide at least one of each type of instance **8a 8b.**

The MCM system **14** is comprises a VPC (virtual private cloud) **15** associated with a user (not shown). Location of MCM instances **8a 8b** within the VPC **15** is advantageous for the security of the MCM system for the user. The VPC **15** shown here is dedicated to the user.

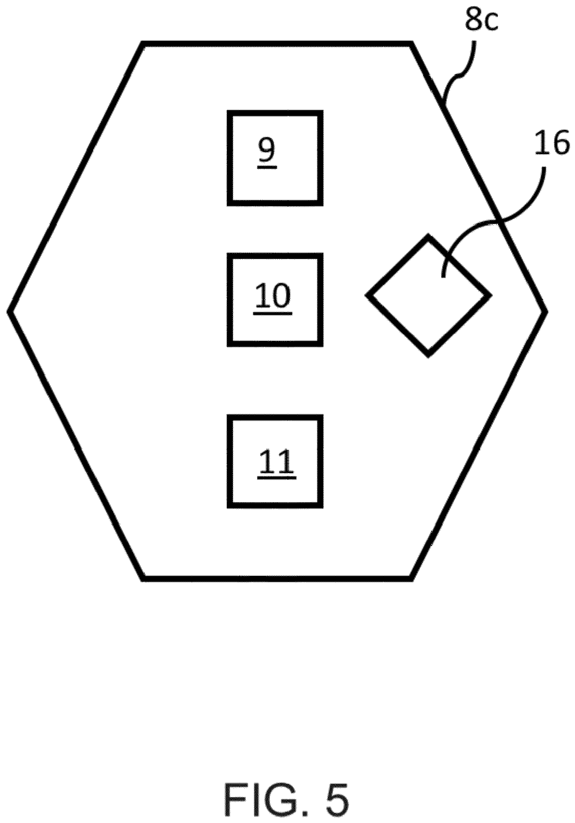

**FIG. 5** illustrates, schematically, a MCM **8c** according to an embodiment of the present invention, which further comprises a customisable output (feature) **16.** The figure shows a MCM with features VPSA **9**, VPSB **10** and DBA **11**, as shown according to FIG. 3a but the MCM of FIG. 3b (further comprising features DBB **12** and BS **13**), or other MCMs described later, can also comprise such a customisable output **16.** Such a customisable output **16** is provided depending on an intended processing of the bulk message(s) after output from the MCM. The MCM output can be formatted to a particular standard or desired characteristic(s), for input into another system or device. This is particularly useful for a plurality of intended recipients where most of the recipients will be receiving their message(s) by means of a particular provider or technology for example. One customisable output **16** is shown in FIG. 5.

The single customisable output **16** shown in the figure should not be considered as limiting. More than one customisable output component may be provided to the MCM, each output comprising a particular desired characteristic or at least one output comprising a characteristic different from other outputs of the MCM **8c.** In other words, more than one customisable output **16** is possible on a single MCM, the outputs being configured either different from each other or comprising (some or all) multiple instances of the same output. The customisable output enables the MCM to interact with a wide range of different message destinations or hardware. As each instance of the MCM is preferably dedicated to a particular user, the customisable output(s) can be provided on the MCM according to the user required configuration. Optionally, the customisable output(s) **16** can be switched on or off according to need, such as when a message is due to be output to a particular destination, such as a chosen service provider or recipient.

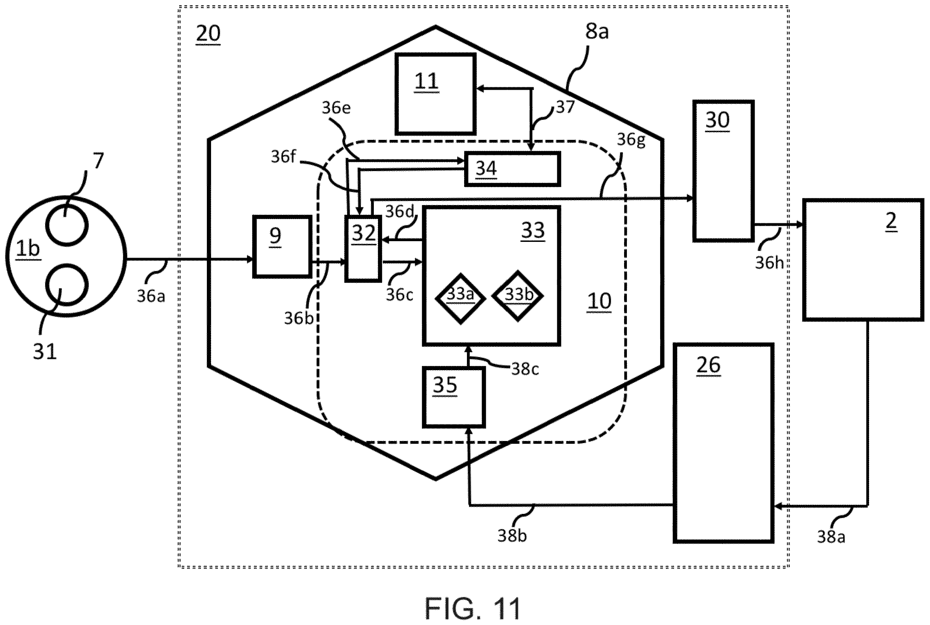

An example of a customisable output component is an SMS Dispatcher API (see FIG. 11 **30** later), which can be used for the outbound sending of SMS message(s) to contacts. Messages can be sent out to contacts at times and under conditions determined by the MCM.

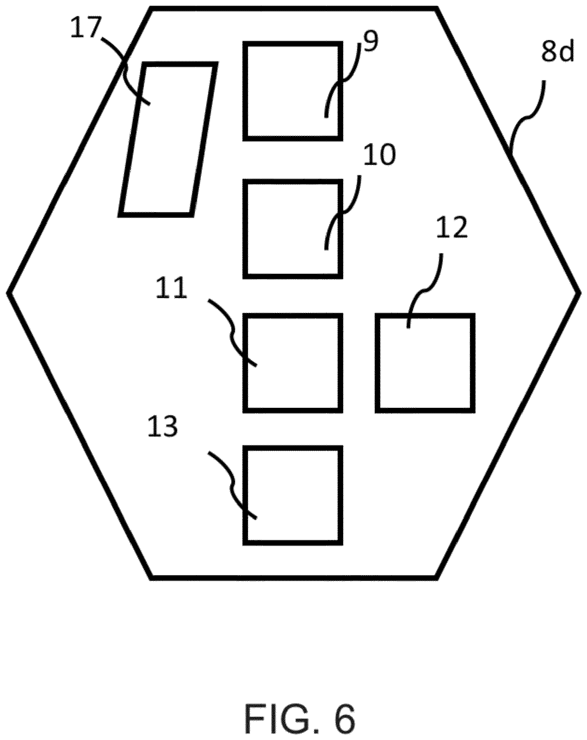

**FIG. 6** illustrates, schematically, a MCM **8d** capable of autonomous operation and used for the sending of bulk or mass messages. The MCM **8d** comprises the additional feature of a message queue **17.** While a MCM **8a** as shown in FIG. 3a may be configured as capable of autonomous operation, a basis MCM **8b** as shown in FIG. 3b may be preferred, given the additional database **12** for additional storage capability (e.g. for details of requirements of messaging processing) and/or a block or bulk storage server **13**, e.g. for back up purposes. (It should be noted that any of the MCM instances detailed here **8a 8b 8c 8e**, alone or with a combination of characterising features of other MCM instances, are suitable for inclusion of a message queue **17**, described below in relation to the MCM of Fig. 6).

For autonomous operation, a MCM instance is provided with a dedicated message queue **17** : the queue effects a 'store and forward' facility. The autonomous operation may be effected e.g. over a predetermined time frame as desired or as a fall-back, e.g. in the event that the MCM is unable to connect with other devices or instances. The MCM is also pre-provisioned with account information associated with the user in the database DBA **11.** This is made possible by the arrangement where a particular MCM is dedicated to a particular user in a virtual private cloud, thereby removing security concerns which would arise in known systems where a cloud is shared between all clients or users of the system. The message queue **17** may, alternatively, be arranged as a distributed message queue between MCM instances, if more than one MCM is located in the VPC **15** (not shown).

When the MCM is operated cooperatively, with other devices or instances not part of the MCM system **14**, as will be described later in connection with e.g. an MTN (message transfer node), the MCM fulfils the role of applying the required user instruction to a (bulk) message to be sent, in accordance with rules, previously set in the MCM according to wishes of the client or user, while the actual message transfer to various destinations can be fulfilled by e.g. the MTN.

Alternatively, the MCM **8d** of FIG.6 may effect a channel choice for output, by means of the messaging queue **17** configuration, to send at least one message to different web services or providers. Dedicated queue(s) within the message queue **17** (sub-queues) may be established for particular outputs. For example, the MCM may output to the MCM provider application, an SMS provider, or an application such as would be associated with a provider, such as Facebook, by means of one or a number of such dedicated sub-queues. It is also possible to provide a plurality of separate message queues **17**, which are optionally dedicated to particular outputs. Each of these channel choices (or outputs from the MCM) are an intermediary step to allow access of the recipient via the second device. For example, the second device **2** (not shown) may allow the recipient access to Facebook or Facebook Messenger, to which the message has been channelled.

Alternatively, the message queue(s) **17** may be located on VPSB **10.**

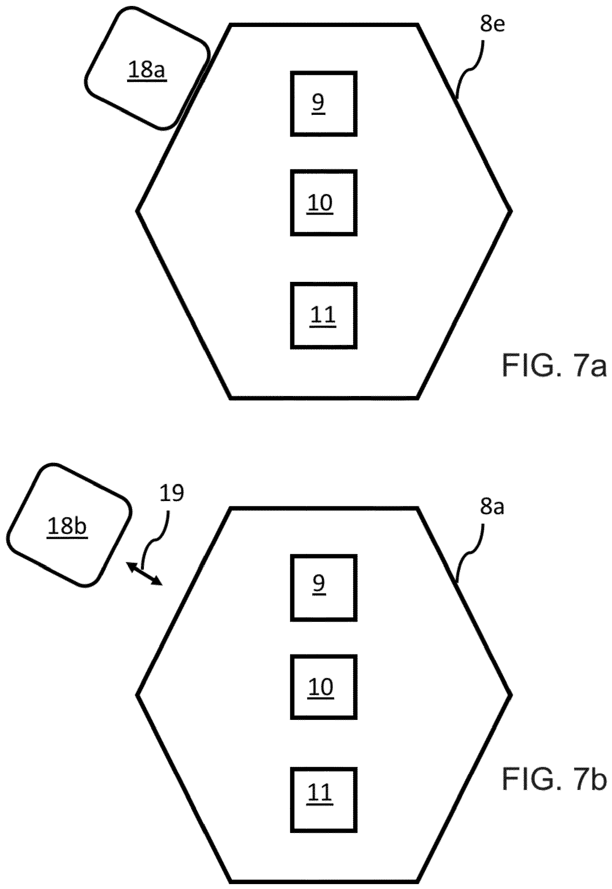

**FIG. 7** **(a and b)** illustrates a MCM configured to cooperate with a plug-in, according to embodiments of the present invention. A plug-in **18a 18b** is shown in both figures. A plug-in **18a 18b** as shown here comprises an instance or device or software component which adds a specific feature to an existing process, device or computer program or process. The plug-in enables customisation, such as but not limited to, an extension to existing capabilities of the device, instance or program, the addition of a new feature(s) or upgrade(s), the reduction of the size of an application which must be installed on a main device, text editors, etc. Frequently, a plug-in is used in web-browsers as an executable, e.g. Adobe Flash Player. Plug-ins usually depend on services provided by the host application or device.

In this instance, the plug-in relies on the MCM and is tailored to work cooperatively with the MCM. In other words, the MCM is an instance or device which can operate without the plug-in but the plug-in requires the MCM to operate. Among other uses, the MCM instance may use a plug-in for updates, additional functionality, additional data storage, etc. These examples should not be considered as limiting.

Referring now to **FIG. 7a**, the figure illustrates a MCM **8e** to which a plug in **18a** has been incorporated. The plug-in **18a** does not form a part of the MCM **8e** but is physically added to a MCM device or interfaced with the MCM or incorporated into the cloud basis of a MCM **8e** instance. MCM **8e** is indicated in the figure to comprise the features **9 10 11** of MCM **8a**, shown previously, a VPSA, VPSB and DBA, respectively. It should be noted, however, that any or all of the additional features DBB or BS **12 13** of MCM **8b** or the customisable output **16** of MCM **8c** or the message queue **17** of MCM **8d** are suitable for inclusion into MCM **8e.** (Similarly, plug-in **18b**, discussed below in relation to FIG. 7b, is suitable for cooperation with any of the MCM instances described herein, including MCM **8e**).

Referring now to **FIG. 7b**, the figure illustrates a MCM **8a** configured to work in cooperation with a plug-in **18b.** MCM **8b** or MCM **8c** or MCM **8d** or MCM **8e** are also suitable for similar interaction. In this example, the plug-in **18b** communicates with the MCM **8a** across a two-way network connection, illustrated by arrow **19.** A network connection **19** may comprise the VPC **15** (not shown).

A plug-in **18a 18b**, as shown in either FIG. 7a or FIG. 7b, is optionally customisable. A minimum of one plug-in **18a 18b** can be associated with a MCM but the addition of more than one plug-in is possible, as is a mixture of plug-in types **18a 18b** with a single MCM. A plug-in **18b** can communicate with the MCM over the VPC **15** (not shown). Preferably, the plug-in **18a 18b** facilitates data retrieval to the MCM from a source, such as an administrative instance associated with the MCM provider or information from a destination or intermediary provider associated with the second device **2** or recipient of the message(s). This feature advantageously facilitates 'reach' to collect information. The plug-in **18a 18b** can comprising a 'polling' feature where the plug-in is configured to request information or data from a specified source at regular time intervals or at specified times or on demand. In this way, any information obtained by the plug-in can be considered to be refreshed and/or up-to-date. This has advantage towards message destination or recipients in terms of their presence on a particular system or availability to receive a message. In one example, such information can be used to facilitate diversion of a message to an alternative destination or address, if a recipient is known to be not present at the preferred destination.

A plug-in **18a 18b** interface to a MCM is preferably configured in a specific format, such as a (chosen) JSON format. Use of such a format facilitates communication across a wide range of other third-party devices or instances. Alternatively, the MCM may be host to a particular software or processes which allow communication with an external party for the receipt of information originating at the external party and/or for return of information back to the MCM. This option is particularly useful for an MCM **8d** operating in an autonomous manner but can be applied to other embodiments of the MCM **8a 8b 8c 8e.**

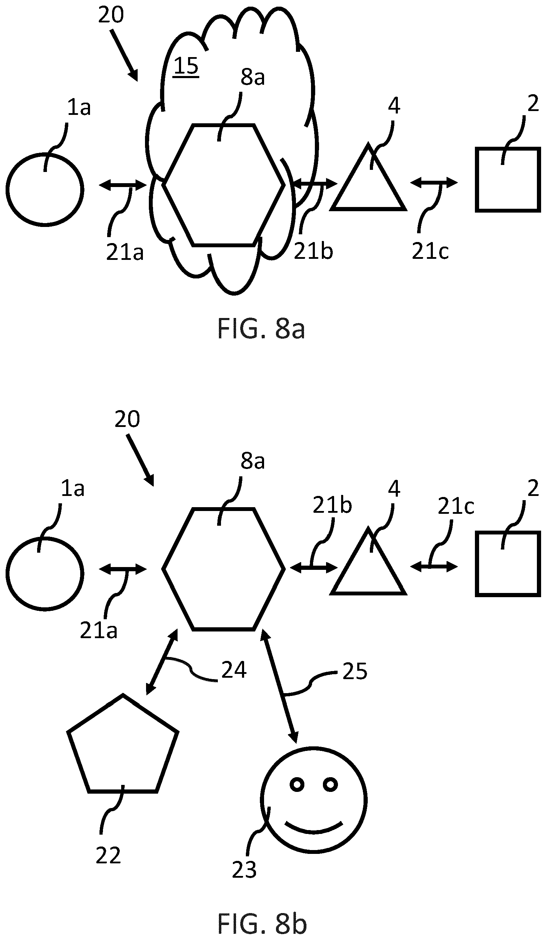

**FIG. 8** **(a and b)** illustrates, schematically, a MCM system **20** for processing a (bulk or mass) message(s) originating from a first device of a user for sending to a second device of a message recipient, which system comprises an MCM device or instance, according to an embodiment of the present invention. The MCM system **20** is shown as comprising a single MCM instance **8a** within a Virtual Private Cloud VPC **15** in FIG, 8a. The VPC **15** is not shown in FIG. 8b, for clarity. Any previously described MCM **8a 8b 8c 8d 8e** is suitable for incorporation into the MCM system **20**, either alone or in combination with at least one other MCM.

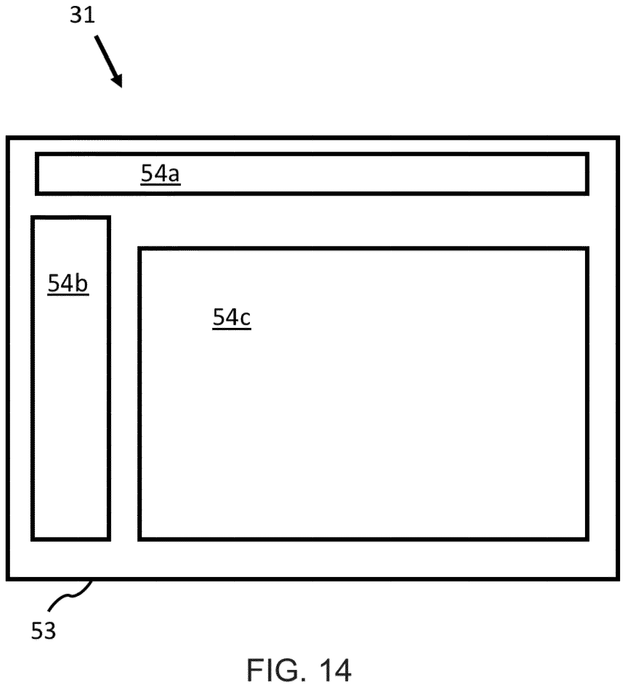

Referring to **FIG. 8a**, a message for bulk distribution is obtained from a first device **1a**, routed and processed through a MCM **8a**, at least one (outbound) message for a recipient being further routed through a service provider **4** for delivery to the second device **2** of the recipient. A first device **1b** comprising an input application **7** may be used in place of first device **1a**, where the input application is customised to at least one MCM of the system **20.** A preferred embodiment of the MCM system **20** comprises a graphical user interface GUI (see later for details, e.g. FIG. 14 **31**) for input to the MCM by the user or client associated with the first device. Message transfer is indicated by arrows **21a 21b 21c**, two-way (send-receive-send) transfer being the preferred implementation to take advantage of the speed and efficiency and message handling capabilities of the MCM system **20** but single direction (send-receive or receive-send) sending options are possible in the communication system. In the system shown, any reply message is referred back through the system via the service provider **4** to the MCM **8a** and then on to the first device **1a** for access by the user.

Referring to **FIG. 8b**, the MCM system **20** is configured to direct a return or reply message from the second device **2**, to a destination which is not the first user device **1a.** FIG. 8b shows a BOT device **22** and a human operator **23**, which are alternative destinations for a reply message from the second device **2.** Either one or both of these alternative destinations may be present, or more options/destinations are possible. (The present figure is not intended to be limiting in options, only exemplary). However, FIG. 8b, comprising the alternative destinations of BOT **22** and human operator **23,** allows illustration of a particularly advantageous operation of a MCM (suitable for any of the MCM embodiments previously disclosed **8a 8b 8c 8d** 8e or feature combinations thereof). Here, a BOT **22** refers to an automated program, running over the internet (illustrated by arrow **24**), which runs automatically and responds to specific input.

A bulk message sent out from a user by means of first device **1a** is sent to MCM **8a** comprised in the MCM system **20** and processed according to pre-determined rules. The MCM **8a** then outputs, among a plurality of messages sent to a plurality of specified recipients, optionally using a variety of different formats or service providers, at least one message for an intended recipient to be routed through the appropriate service provider **4.** For example, the outbound message may comprise a SMS message, directed through a text message service provider, for second device **2** which comprises a mobile device of the recipient. The recipient receives the message, which e.g. asks for confirmation of an appointment by text reply of Y for yes or N for no. The recipient types Y and sends a reply message back to the service provider **4** which is then sent back to the MCM **8a.** According to the configuration of the MCM **8a**, rules are applied which determine that the reply message should be sent to BOT **22**, which is accumulating all replies concerning affirmative or negative responses to the original message. As indicated by arrow **24**, it is possible to configure the BOT to communicate back to the MCM, as well as receive a message from the MCM, for exchange of updated information or to confirm receipt of the reply message at the BOT **22.**

Should the BOT **22** be unable to process the reply message (perhaps a reply other than Y or N is present in the reply message, for example), the MCM **8a** is configured to receive a refusal of receipt from the BOT **22** (or other indicator as specified in the rules of the MCM **8a** or the configuration of the BOT **22** itself) and, in such a circumstance, to redirect the received reply to a human operator **23.** As indicated by arrow **25.** (Again, the interaction between human operator **23** and MCM **8a** may be one- or two-directional, as shown by arrow **25**). This may be achieved by a variety of known means, but is especially suitable for forwarding of the original reply SMS or text. The human operator **23** may be part of a contact centre, for example, where a plurality of agents can assess incoming messages and act according to the information presented to them. For example, if the MCM is configured to send an alert message on receipt of the refusal from the Bot **22** then the human operator **23** may be triggered to contact the recipient directly by text or by another means, such as voice call or instant messaging. This allows the human operator to ascertain the required reply information concerning the original bulk message sent out. At the same time, the user associated with the first device **1a 1b** is not required to take action in response to a reply.

The example outlined is capable of implementation in many ways and the description above should not be considered as limiting. The MCM facilitates an escalation mechanism, in the example above from an automated device or system to a human operator. Advantageously, the MCM facilitates sending of a bulk or mass message, tailored to at least one recipient, and direction of at least one reply message to at least one recipient (device or human) other than the sender. Further comprising another redirection (or more redirections) if needed or desired. Such processing is especially useful for businesses or Enterprises where a large number of recipients of a bulk message may be intended and speedy processing of any replies is required, with the replies possibly comprising important or large amounts of information needed by the business or Enterprise.

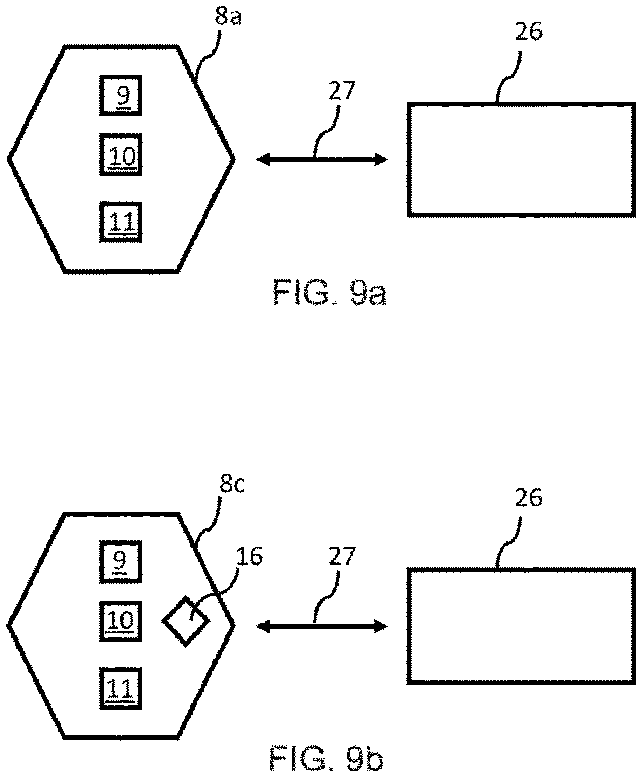

**FIG. 9** **(a and b)** illustrates, schematically, a MCM device or instance (comprised in a MCM system, system including a VPC not shown) arranged cooperatively with a message transfer node MTN **26**, according to embodiments of the present invention. The MTN may be configured for autonomous operation or form part of a message transfer system (MTS, not shown, further including administrative and provisioning components, suitable for the MTN and/or MCM) when interacting with the MCM - both options are possible. Arrow **27** indicates the message flow trajectory may be effected in two directions between the MCM and MTN **26.** In a preferred embodiment, an application programming interface (API) call may be used to facilitate MCM - MTN interaction.

The MCM may **8c** or may not **8a** comprise a customisable output **16**, tailored to the MTN, as shown in FIG. 9b or FIG. 9a, respectively. The customisable output may be especially tailored to the requirements and operation of the MTN, e.g. with a special MTN output component as FIG. 9b. Any MCM **8a 8b 8c 8d 8e**, as discussed previously, is suitable for cooperation with a MTN **26.**

International patent application PCT/IB2017/051548, published as PCT/2017/158558, discloses details of a message transfer node (MTN) **26** and message transfer system (MTS).

Ideally, one or more MCM's **8a 8b 8c 8d 8e** are provided in a system (further comprising a virtual private cloud, VPC, not shown), cooperative with at least one Message Transfer Node (MTN) **26.** The MTN **26** is not normally comprised as part of the VPC **15** (not shown) of the MCM system **20** (not shown), thereby securing the MCM system for the user. This should not be considered as limiting, however. The business provider of the MTN **26** is, preferably, also the provider of the MCM **8a 8b 8c 8d 8e** and the cooperative system facilitates optimisation of processing. Within such an arrangement, the MTN **26** is, preferably, not provided on the same infrastructure as the (one or more) MCM instance(s). Ideally, the MTN **26** is located externally to the VPC within which the at least one MCM resides, the MCM communicating with the MTN over the internet, via encrypted HTTP network calls. The MTN **26** may be arranged as the message delivery agent or as an intermediary between the MCM and another service provider.

The MTN **26** is particularly advantageous in cooperation with a MCM, as a MTN facilitates translation of messages between different formats and languages, such that a very wide range of options are available as output from the MTN. This, in turn, provides a very wide range of possibilities for messaging to the second device **2** of the message recipient (not shown). Preferably, the MCM **8a 8b 8c 8d 8e** connects to the MTN **26** via an API (application programming interface) call. Within such a connection details, such as account details of a customer, authentication parameters required by the MTN for operational routing of the messages associated with a customer's particular MCM instance, etc., can be comprised.

A message transfer node (MTN) **26** is capable of autonomous operation for defined periods of time or interaction with a Message Transfer System (MTS). The MTS also comprises administrative and operational components which provide e.g. information and up to date customer details. The system of message transfer is designed to provide an interface between a sender and a receiver. Such interfaces are then connected to delivery agents e.g. network operators. The MTN system permits the routing or forwarding of messages from source to an integrated third-party application or a specific destination. This allows for normally incompatible systems to receive and send message to each other. One MTN can facilitate a single instance for a plurality of connections, which would normally require a plurality of individual connection components. Also, the administrative data of the MTN can be shared with the MCM and used to add to or update rules or information on a user. This kind of cooperation between MTN and MCM is highly advantageous for the efficiency of message transfer and for providing an extended range of options with respect to message processing, such as formatting.

By way of example, Adobe CM requires an external account to be configured in order to send SMS messages. Such an account requires the integration of third-party connectors such as, but not limited to : NetSize, Sybase365 (SAP SMS 365), CLX communications, Tele2, O2. Such connectors require their own setup with respect to their respective providers.

A MCM **8a 8b 8c 8d 8e** configuration is more streamlined, requiring, for example, only an API (application programming interface) call containing the account number and credentials for the user's instance. An MCM is preferably configured with such information during deployment, thereby avoiding further configuration later. However, updated details etc. can be provided to the MCM after deployment.

Within the MCM **8a 8b 8c 8d 8e** a flow can be defined for processing of an incoming message from a first device **1** (not shown). Such a flow comprises one or more rules, each of which comprises logic and processes required to process any incoming reply from a recipient, once a message is delivered to a recipient. Each rule facilitates a specific action based on the perceived contents of an incoming message from the first device, such as how to forward the message to an integrated third party or other recipient or second device. For a business or Enterprise, such third-party applications may take the form of contact centre software or a business specific system. An Enterprise may initiate a messaging campaign with bulk messaging destined for a large number of recipients. During construction of the campaign, by the Enterprise, for example by means of a user providing input to a graphical user interface (GUI) in network communication with the MCM, a flow may contain a rule requiring certain replies (from a particular user, for example) to be forwarded to an agent or third-party contact centre, based for example on content or time received (between certain hours, outside normal working hours, for example). Enabling such a rule is facilitated by the MCM while the outgoing message is e.g. relayed by or through the MTN **26.** Message replies from the second device **2** (not shown) or recipient are then routed back through the MTN **26** to the MCM **8a 8b 8c 8d 8e**, where the MCM applies further processing to the reply message.

The MTN **26** can also be used, advantageously, to provide interface with competitor providers or other types of systems. For example, the MTN can provide output to providers such as Twillio.

The range and availability of messaging applications has rapidly expanded. Such messaging applications include text messaging, such as SMS (Short Messaging System or Service, suitable for short text messages up to a maximum length of characters) or multimedia messaging, such as MMS (Multimedia Messaging Service, an extension of core SMS technology which allows for the sending of images, such as photos or videos, for example). Development of messaging applications is often driven by the increasing use of mobile devices, such as portable phones. Instant messaging is available through applications such as Jabber and Skype, which allow for exchange of text and files by internet users using a browser or an instant messaging client, and live chat systems such as LivePerson and Moxie which provide chat functionality in websites, among other uses. Generally speaking, a user of these applications chooses to install a particular application on a (often hand-held, mobile) device and accesses the basic functionality through the device. A user may, further, create an account with a company, such as Jabber, thereby creating a connection in order to access the functionality. The various messaging alternatives are thus accessed by conscious user choice and/or action.

Some companies, such as Twilio, allow the use of their proprietary messaging applications (by mean of an account) in association with, or embedded in, other applications. The user can build-in parts of the Twilio application package as part of their own software product, while maintaining an account relationship with Twilio. A mark-up language dedicated to Twilio is used and it is possible to initiate response to incoming calls or to initiate outgoing calls, for example. The functionality is targeted to provide communication access for sales and mass publicity, for example. The messaging options include SMS, phone calls etc. which can be accessed or connected across different media, such as web or phone connections. Particular language formats and software are available for incorporation into other products. Many of these exist in open source format, available to software developers and other companies, thereby allowing proliferation of the messaging applications. The Twilio product is based on cloud communication techniques to remove the need for reliance on traditional hardware. The cloud essentially acts as one large computing device, with components acting together in unison, each component relying on other components in real time and operational decisions being based on the status of the whole system. The system becomes a global entity, a resource for those connected to it by means of the application.

The implementation of messaging relies on a structure of basic protocols and industry standards. Each messaging system uses a propriety message transfer system to route messages between users. In the case of SMS, these protocols have been traditionally implemented in telecommunications hardware systems. More recently, software-based SMS systems have been developed which implement some, or all, of the SMS protocol in software running on servers. Kannel is an example of such an SMS system implemented in software. In the fullest terms, Kannel operates as a gateway to WAP (Wireless Application Protocol) infrastructure, thereby allowing access to a wider user base. In terms of mobile devices and messaging, it provides an SMS gateway for GSM (Global System for Mobile communications, relating to protocols for cellular networks used by mobile phones) networks. The software is provided as open source and therefore is publicly available. Increasingly, development of the internet is driving increasing use of software for communication products.

At the side of the second device **2** (not shown) or recipient, therefore, a significant number of messaging and communication options are available. By forming a system comprising the MCM **8a 8b 8c 8d 8e** and the MNT **26**, a highly efficient message processing and delivery can be achieved, especially advantageous to the plurality of recipients addressed by bulk or mass messaging.

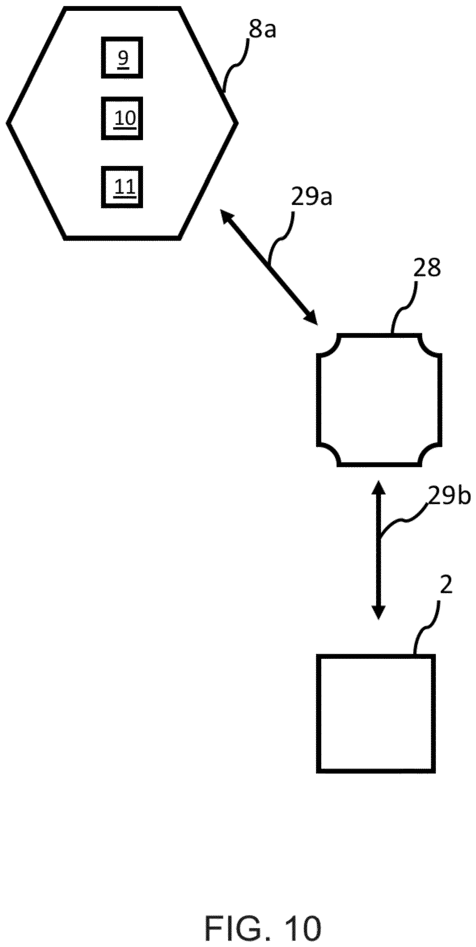

**FIG. 10** illustrates schematically a MCM device or instance (comprised in a MCM system, VPC not shown) arranged cooperatively with a multimedia messaging service gateway (MMSGW) **28**, according to an embodiment of the present invention. The Messaging Gateway (MMSGW) of the figure is illustrated as cooperative with a second device **2**, where said device, in this example, is arranged to comprise a call centre. Alternatively, the MMSGW **28** may be comprised in the call centre (not shown). Any MCM **8a 8b 8c 8d 8e** according to the provisions of the present invention is suitable for cooperation with a MMSGW **28.**

The messaging gateway (Multimedia Messaging Service GateWay, MMSGW) **28** shown in the figure is arranged in association with a call centre as the second device **2** associated with the recipient. Such an arrangement facilitates a business or Enterprise to make use of an alternative reply route to an existing part of the company, which may be a completely different department from the origin of the bulk or mass message to be sent. Alternatively, as indicated by arrows **29a 29b**, the call centre can originate a bulk message for sending, the call centre then being both the first device **1a 1b** (not indicated) and the second device **2.** The messaging direction can be single direction towards the call centre from the MCM, if desired, but a two-way communication is advantageous.

International patent application PCT/US2016/037592, published as WO/2016/205344, discloses details of a MMSGW messaging gateway. An advantage of the MMSGW is the ability to provide visibility of communications and history between a call centre and a user and/or a business and said user, while providing a secure environment for the information without the need for incorporation into a business system. The call centre may not be a part of the business and access to business systems, which would normally store such information, would usually be prohibited. The MMSGW stores relevant communication information as an intermediary between the business and the call centre, to provide accessibility of necessary and relevant information without compromising the business. The MMSGW information can be accessed by both business and call centre. Interaction of the MCM with the MMSGW is therefore highly advantageous, as the MCM is message handling towards a MMSGW component also specifically dedicated to message handling and can receive replies from the MMSGW, if desired.

Figures 9 (a and b) and 10 show examples only, which should not be considered as limiting. Both the messaging gateway MMSGW **28** and MTN **26** can interact and cooperate with the MCM **8a 8b 8c 8d 8e**, a MCM not being restricted to cooperating with only a Messaging Gateway or only a MTN at any one time.

Additionally, it is also possible for the Messaging Gateway and the MTN to interact with each other independent of the MCM.

**FIG. 11** illustrates, schematically, details of modules or subcomponents and process flow of a preferred embodiment of an MCM system **20** comprising a single MCM **8a** and which further incorporates an outbound message module, OMM, and an inbound message module, IMM, as components of the system **20**, the system being suitable for facilitating bulk messaging from a first device **1a 1b** of a user to a second device **2** of a recipient. Any MCM **8a 8b 8c 8d 8e** according to the embodiments of the present invention is suitable for inclusion in the system **20** shown in FIG. 11 (the system indicated by the double dot line).

The preferred embodiment illustrated in FIG. 11 comprises a SMS Dispatcher API (application programming interface) **30** as the outbound message module and a message transfer node (MTN) **26**, previously described, as an inbound message module. These are options and should not be considered as limiting. Other types of modules may be implemented. In this context 'outbound' indicates an output or message exiting the MCM **8a** after processing, which is e.g. destined for a second device **2** associated with a message recipient, either directly as shown in the figure or indirectly via an intermediary device or system, e.g. such as a service provider, MTN, MMSGW or website. An outbound message can be sent out from the MCM at times and under conditions decided upon or determined by the MCM, optionally in accordance with rules previously provided by the user. Similarly, 'inbound' indicates a communication or message entering the MCM **8a** as a reply from the recipient after receipt of the original outbound message. For clarity, it should be noted that 'inbound' and 'outbound' in this context should not be confused with any preliminary instruction to the MCM from the first device **1b** of a user or client or Enterprise.

FIG. 11 shows the MCM system **20**, which here includes the outbound message module, (SMS Dispatcher API **30**) and the inbound message module (MTN **26**). The VPC (virtual private cloud) is not shown in the figure but can comprise the MCM system **20** or only the MCM **8a**, as desired. Similarly, the MCM system **20** may be limited to the MCM **8a** and VPC, with inbound and outbound communications handled by external agents. An advantage of the embodiment shown in FIG. 11 is the ability of the MCM system provider/administrator to include the communication functionality under its control, thereby providing additional security of the overall system and efficiency of message handling, including capability for messaging formatting.

The first device **1b** is shown to include not only an input API **7** but also a graphical user interface, GUI **31**, associated with the MCM **8a.** The input API **7**, GUI **31**, or other input options such as a website, not shown, are available to a user of the first device **1b** to send instruction to the MCM **8a.** The user may have access to only one option or a plurality of options from the same device **1.** Alternatively, first device **1a** may be used and the MCM **8a** accessed via internet communication. Alternatively, in another preferred embodiment of the present invention (not shown), input comprises a GUI (not shown) for direct access of a user to the MCM **8a** with capability to configure a message for input to the MCM, monitor messaging progress, or receive reply messages. This GUI is preferably arranged as resident on a first virtual private server, VPSA. The GUI facilitates tailoring of a message to required format, with rules to be applied, provision of rules associated with the user etc.

In the example shown in FIG. 11, the input API 7 provides an interface through which users of the MCM system for bulk messaging will interact. It provides an access route(s) to the MCM **8a** or MCM messaging application **33a** by connection with the VPSA **9** of the MCM. The VPSA **9** interface preferably takes the form of an API (Application Programming Interface) which is, preferably, communicated with using GraphQL specification and query language. Users connecting to the MCM system may include both human and programmatic users. Human users preferably interface with this module via the GUI (Graphical User Interface) **31**, located on the first device **1b.** The GUI **31** is configured to translate the requests of the user into network calls which can then be passed **36a** to the MCM, specifically to the VPSA **9.** Optionally, the GUI **31** is arranged to interact with the input API **7**, specifically to transfer received instruction to the input API **7**, for the purpose of transfer to the MCM **8a** and/or VPSA **9.** Programmatic users preferably interface using direct API access, either via media such as a custom-built application, program or script. Both GUI and/or Programmatic users preferably make direct network calls, containing the functionality or rules or instructions, to be carried out. The API in the VSBA **9** will then relay those instructions to the relevant internal components of the application for processing and return responses.

The figure shows the main components of the MCM **8a**, namely VPSA **9**, VPSB **10** and DBA **11.** As previously discussed, virtual private server, VPSA, **9** is configured to serve a customer facing interface or GUI **31** or other means through which the user can interact with the MCM (and application(s)), which may be located on the MCM itself, and/or implement required functions. Database DBA **11** comprises the 'master' data store comprising MCM relevant data, e.g. data required for the information relating to messaging campaigns and bulk or mass messaging, rules logic to be applied, recipient contact details, customer details, etc. VPSB **10** is shown (dashed line) in expanded form in FIG. **11****.** VPSB is responsible for implementing the functionality of the MCM and does this using sub components which can apply the necessary processing e.g. logical processing instances or other component devices. VPSB **10** of the example of FIG. 11 comprises : a Handlers and Controllers (H&C) module **32**, a Campaign Manager (CM) module **33** which itself comprises at least one application (APP) **33a** and at least one Rules Engine (RE) **33b**, a Data Sources Connector (DSC) module **34** and a Call Back (CB) module **35.** These features of VPSB **10** will now be discussed in more detail.

Handlers and Controllers (H&C) module **32** : this module is responsible for flow control of the processing of the message and information required by the CM module, through the MCM from receipt at the VPSA **9** to delivery of bulk messages to the SMS Dispatcher API **30.**

Campaign Manager (CM) module **33** : this module is responsible for the handling and processing of the message received from the first device **1b** into the required form for sending as an outbound message(s) and, consequently, interacts with many other sub-modules of the MCM **8a.** The sending of one or more outbound messages is referred to here as a campaign. The CM module **33** is preferably configured to contain the code which is responsible for the scheduling of recipients/contacts within the MCM system **20.** Planned scheduling allows optimisation of processing for the user and the efficient use of MCM resources. So-called 'campaign throttling' can be implemented, by staggered sending of messages of a particular campaign to avoid overload of the system and to avoid a wave of reply messages arriving back into the MCM system in a short timeframe. The CM module **33** is also responsible for the processing of those contacts based on rules/parameters attached to them e.g. name, number, address etc. The CM module is preferably configured to only process such contacts that have not been previously processed. Such restrictions may be due to a recipient having just been added to the campaign or, in some cases, where the recipient/contact has been attached to a campaign which is scheduled to be processed at a certain time. The CM module **33** is configured to determine which campaigns should be run and at which date/time. When the time to process a campaign and its attached contacts - has arrived, the CM module **33** is configured to create a contextual state for each contact-campaign pairing. A user-defined flow, containing processing rules, is then applied to the reply from each contact as it is received. Contained in this flow can be various rules which the user has constructed in order to apply conditional process method or logic to each reply from a contact during the course of an active campaign. Such process or logic is used to determine actions that may be triggered based on evaluation of each rule against a reply.

Application (APP) **33a** : this module comprises at least one pre-defined rule or set of rules pre-determined by the user or Enterprise and communicated to the MCM **8a.** The APP **33a** is arranged to comprise at least Flow rules, Flow rules being applied to inbound messages. For example, this APP **33a** assists with implementing e.g. a redirection of a reply message to a destination other than the first device **1a 1b**, as previously discussed. One or more APP's **33a** may be provided, such APP's providing the user, or Enterprise or originator of the message for bulk distribution, with an ability to store and/or re-use such Flow sets which the user may wish to regularly apply to more than one campaign.

Rules Engine (RE) **33b** : this module applies pre-determined rules to the message to be processed by the CM module **33.** The RE module **33b** comprises the basis for processing, formatting and sending the message according to instruction from the user or Enterprise, facilitating any bulk or mass message to be tailored to each or a group of recipients or contacts. Processing by the MCM is arranged to continue through each applicable rule until either further input from the user of the first device **1b** is required or until a pre-determined processing point has been reached or unless the processing is scheduled to run at a later date or time. Once processing has ceased, the CM module **33** will update the current context for that particular recipient (or contact) within the MCM system **20**, optionally, updating the DBA **11.** The CM module **33** is configured to receive and process input from any recipient (or contact) that is associated with any campaign known to or within the system. This component allows the MCM system to check whether or not processing of contact(s) is permitted at a certain time and if so, provides the ability for certain user-configured variable to be applied to the processing. Examples of conditions which the component/CM module **33** can implement include, but are not limited to:
- Hours of operation:
   - Opening hours: the Enterprise may wish to declare hours that, between which, the system will take a certain action with regard to incoming message replies. Conversely, the system may act another way outside of such hours.
   - Holidays: the Enterprise may wish to declare certain days on which the Enterprise is not operational. As such the system may be configured to take another action against incoming replies on these days as opposed to action taken on normal/non-holidays.
- Personally identifiable information (PII) - this component also enables the system to mask or hide certain data contained within incoming replies which is deemed to be PII. The following are the possible types of PII which the component shall be configured to mask:
   - Social security information.
   - Credit card numbers.
- Content Filter - the Enterprise may wish to make use of pre-composed lists or sets of words which they wish to mask from incoming replies. The following are the possible types of Filters which the component shall mask:
   - Profanity.
   - Blacklists - word lists which the Enterprise does not wish to be visible in incoming replies e.g. competing company names, confidential information etc.

Comprehensive rules in the RE module **33b** can provide e.g. masking application (to remove sensitive information from a message, such as credit card details or addresses, and routing. Other features can comprise rules relating to e.g. dictionary or pattern matching, components being included in the MCM RE.

Data Sources Connector (DSC) module **34 :** this module is responsible for interaction with the DBA **11** (or other internal MCM database(s)) and for maintenance and application of data information used by the CM module **33**, including data on external contacts or sources. The DSC module/component **34** is configured to comprise the functionality controlling how the MCM system **20** will connect and interact with any number of data-sources/stores which reside outside of the system's own internally associated database (e.g. DBA **11**). For example, such sources can include some or all of the following:
- HTTP requests to retrieve data.
- Connections to Enterprise owned databases.
- Connections to 3^{rd} party sources.

Call Back (CB) module **35** : this module facilitates the processing of inbound messages (replies) to the MCM **8a.** Preferably, a single CB module **35** is responsible for the processing of inbound reply messages from recipients associated with a campaign. The CB module **35** is also effective in the escalation or forwarding of a message reply based on multiple parameters, such as message content and/or time of arrival to multiple end points or recipients (BOTs, artificial intelligence (AI) BOT's, contact centres, websites/databases, archives etc.). The CB module **35** can comprise parsing capability or parser component(s) for inspecting incoming messages.

FIG. 11 further comprises details on a process flow of a message from the first device **1**, through the MCM **8a** and OMM **30**, to the second device **2** of a recipient. This 'sending' process flow is indicated, schematically, by arrows **36a to 36h.** The DBA **11** can be consulted during this process, for obtaining data applied to the message or for exchange of data or update of the DBA, between flow arrow **36e** and **36f**, as shown by arrow **37.** Should the recipient reply to the received communication/message, a 'reply' process begins with a reply, e.g. a communication or message, sent from second device **2** to the IMM **26**, which forwards to the CB module **35** and/or on to the CM module **33.** This 'reply' process flow is indicated, schematically, by arrows **38a to 38c.**

The MCM system **20** as shown in FIG. 11 as part of an overall messaging system may provide advantage in the sending of bulk or mass message with a plurality of functions not available in the art, by virtue of the dedicated MCM system components and method of operation, such as but not limited to :-
- No artificial intelligence restrictions on SMS throughput.
- Intelligent inbound campaign flow designs where events/actions-based rules including message replies can be stored and not discarded, particularly once a campaign is finished.
- Escalation or forwarding of reply message based on multiple parameters, such as message content and/or time of arrival e.g. to multiple end points or recipients.
- Real-time campaign reporting.
- User search function and data tracking.
- Campaign throttling.
- Contact centre integration and escalation to AI or 'live' agents, particularly when the MCM is arranged cooperatively with a MMSGW, as described previously.
- Calendar and holiday time-based rules can be provided in the RE.
- Features of the MCM system are available through API or GUI interface, allowing the user to be free from restrictive hardware or software installations at site or premises.
- Administration user level control can be implemented and stored in the DBA for use by the RE.
- Connections to Enterprises are secure and can be TLS encrypted.

The MCM system **20** preferably comprises system integrity controls (not shown), such as authentication and authorization.

Authentication is the process of confirming the identity of a (current) user associated with the first device **1.** Within the MCM system **20**, authentication is preferably arranged to operate as follows:
- A call is made from the VPSA **9** to a dedicated API (not shown) comprised in VPSB **10** with such a call containing the username and password variables the user has entered.
- The variables are then checked by the system to ensure they match those held within the database.
   - If the user enters the correct details, an access token is then generated and returned to the user's system included in the response to the user's system.
   - If the user has entered the incorrect details, they are alerted and prompted to retry.
- With each subsequent call to the API the previously received token is attached. Authentication is now considered complete. Once the user includes their respective access token - they have access to any data and functionality for they are authorized to carry out.

Authorisation is the process of ensuring that a user has the necessary permission to carry out a desired task, access a piece of data or utilize certain. Within the MCM system **20** authorisation is preferably achieved as follows:
- Once the user has been authenticated and a function triggered, a check is effected to ascertain if the user is permitted to carry out such an action.
- Checks can be implemented by use of Access Control Lists (ACL).
- ACL checks ensure that the user attempting to trigger the function belongs to an access list, which in turn has permission to execute said function.
   - If the ACL check passes or succeeds against that user - the user is permitted to execute the required function.
   - If the ACL fails, the user is blocked from executing the required function and permission is denied.

**FIG. 12** is an illustration of a block diagram of a computing apparatus suitable for implementing and practicing aspects of the disclosed embodiments of the present invention.

Referring to FIG. 12, the figure shows a block diagram of a computing apparatus **39** that may be used to practice aspects of the disclosed embodiments. For example, any of the devices, providers and systems disclosed herein, alone or in any combination, may be implemented using the computing apparatus **39.** The computing apparatus **39** may include computer readable program code **40** stored on at least one non-transitory computer readable medium **41** for carrying out and executing the process steps described herein. The computer readable medium **41** may be a memory of the computing apparatus **39.** In alternate aspects, the computer readable program code may be stored in a memory external to, or remote from, the apparatus **39.** The memory may include magnetic media, semiconductor media, optical media, or any media which is readable and executable by a computer. Computing apparatus **39** may also include a microprocessor **42** for executing the computer readable program code **40** stored on the at least one computer readable medium **41.** In at least one aspect, computing apparatus **39** may include one or more input or output devices, generally referred to as a user interface **43** which may operate to allow input to the computing apparatus **39** or to provide output from the computing apparatus **39.**

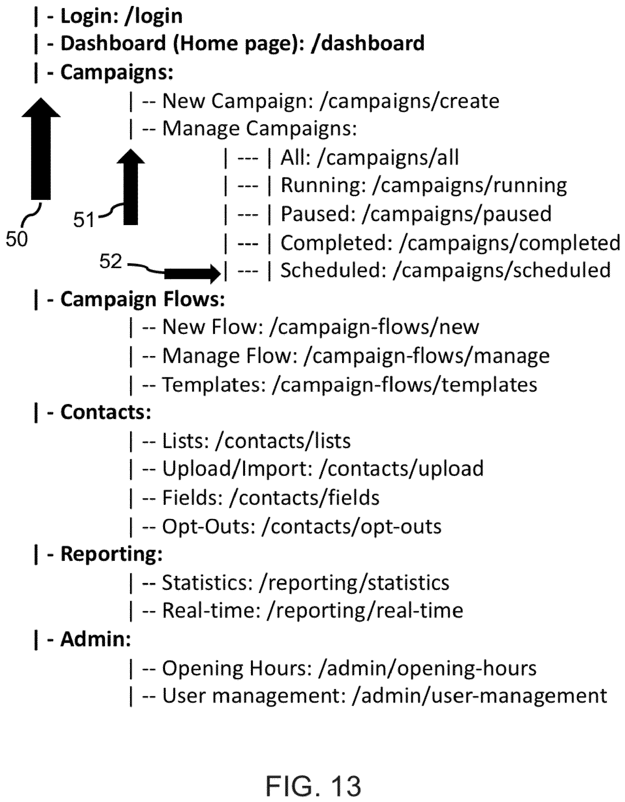

The output of a graphical user interface (GUI, e.g. as shown in FIG. 13 or FIG. 14 below), can be provided to a computer or like system, having a processor and an input/output/user interface, e.g. as shown in FIG. 12. The processor may be configured or otherwise programmed to analyse the received data. The input/output interface may include a display for outputting the processed data, or information relating to the analysis of that data. The input/output interface may also include any hardware such as buttons, keys, or other controls for receiving user inputs to the computer system.

The various embodiments of the present invention can also be provided as distributed or cloud-based systems (preferred). Advantageously, the MCM and/or MCM system may be implemented as entirely cloud-based. This limits cost to a user in terms of hardware and maintenance and further allows for easy and speedy scalability, if required.

Messaging user(s), such as users utilising at least one smart phone or other mobile device, may be provided messaging capability by means of messaging platforms. Examples of messaging platforms include but are not limited to : SMS, MMS, Messenger, Google and/or Viber. Various messaging platforms operate by means of established means, methods and protocols. An Enterprise or business may comprise a chat or contact centre. Examples of chat and contact centre vendors include but are not limited to : Cisco, Avaya, eGain, Oracle and/or Salesforce. Intermediary services may include Al systems, virtual agents and/or automated 'bot' services.

Access of a user of the first device to the MCM system can be facilitated by e.g. web-portal and/or API via a front-end that is web-based or that is incorporated in or cooperative with a separate input APP **7**, as illustrated in FIG. 12, for example. The input APP **7** can comprise a front-end or client-side application which is comprised in or associated with the MCM system and this portion of the MCM system can be accessed by the user via their own machine (first device). The front-end can comprise a graphical user interface (GUI) having one or more screens that serve as a virtual interface, with interface rules determined and applied by the provider of the MCM (system). The provider of the MCM system may also administer and maintain the associated web-portal, API and/or APP **7.**

More particularly, a GUI **31** (not shown) comprising an interface (preferably a visual interface) by which the user of the first device **1** (not shown) can access the MCM **8a 8b 8c 8d 8e** (not shown) is a preferred method for input of instruction from the user and the specification of rules to be applied to the outbound message or bulk or mass message(s) to be processed by the MCM system. The GUI facilitates access and operation of the MCM by the user of the first device. The GUI (and the first device where appropriate) including any associated input/output devices (not shown) such as displays, touchscreens, keyboards, mice, operational keys and buttons, and the like, together thus constitute one preferred example of a human-machine interface. The GUI may be incorporated in or cooperate with a separate input APP **7**, as illustrated in FIG. 12 for example. The input APP can comprise a front-end or client-side application which is comprised in or associated with the MCM system and this portion of the MCM system can be accessed by the user via their own machine (first device).

**FIG. 13** illustrates, schematically, a navigation hierarchy of a graphical user interface (GUI) according to an embodiment of the present invention. Ideally, the GUI, an example of a visual interface, is administrated and maintained by the provider of the MCM system.

The GUI **31** is preferably web-based and accessible by means of a web browser. Navigation in the GUI **31**, is preferably facilitated by means of a web browser which is directed to a URL (uniform resource locator, i.e. an address of a World Wide Web page) designated to the user's private instance of the MCM. As indicated above, the GUI **31** may additionally or alternatively be a front-end of an APP **7.** The GUI facilitates the user to interact with various functionalities provided by the MCM and to tailor or choose such functionality to their own requirements. Navigation in the GUI **31** may be facilitated by a menu or like navigation structure. For a web-based GUI **31**, each screen may also be accessible directly via a unique URL, sub-domain, or like address.

Referring now to FIG. 13, this figure shows a list, in (parent-child type) hierarchical form, of page routes or views within a preferred embodiment of the GUI, according to the embodiments of the present invention. Level 1 of the hierarchy, shown as indicated by arrow **50**, comprises the **Login** (for security for the user), a **Dashboard** for easy navigation, **Campaigns** (for supervision or overview of all campaigns associated with the user, including those running or planned), **Campaign Flows** (where set-up and editing of rules is facilitated), **Contacts** (for indicators and lists of recipients, **Reporting** (incorporating statistics and real time operation information) and **Admin** (for management and definition of 'opening hours' etc. if the bulk messages are destined for different time zones and continents). A second level, Level 2, as indicated by arrow **51**, allows sub-division of the main Level 1 **50** categories into sections. The second level may be displayed and accessed by user selection of a parent item of the first level. A third level, Level 3 indicated by arrow **52**, facilitates in-depth separation of different campaigns for management and analysis, according to their run status (such as completed, paused, scheduled etc.). The third level may be displayed and accessed by user selection of a parent item of the first and/or second level. These examples are not limiting - any number of levels can be defined in the hierarchy, as desired, and any number of 'pages' or interface screens can be established in the GUI, each interface screen or page relating directly to a particular navigation route of the hierarchy. This allows tailoring of the GUI and/or APP to the needs of the user(s).

The MCM system can also be configured to enable 'campaign reporting', either by inspection of the GUI or by requested export of data from the MCM to the user of the first device.

**FIG. 14** illustrates, schematically, a preferred interface screen template **53** of the GUI **31**, according to an embodiment of the present invention. Said template comprises, at least, a banner/header **54a**, displaying the MCM system logo and other identification, optionally including details of the current page information or title, a navigation bar area **54b**, where the navigational hierarchy can be displayed for ease of movement between interface screens, and a working area **54c**, for the display of relevant information and/or provision of input areas to receive user input and instruction. These features are merely examples and the interface screen(s) can be tailored as desired and as appropriate to the functionality of the MCM system.

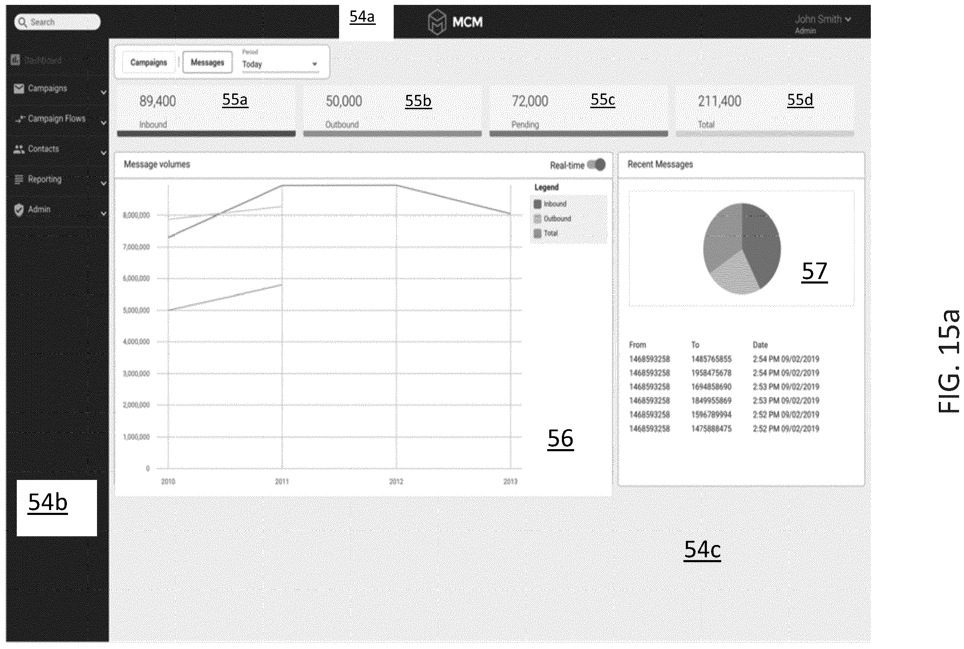

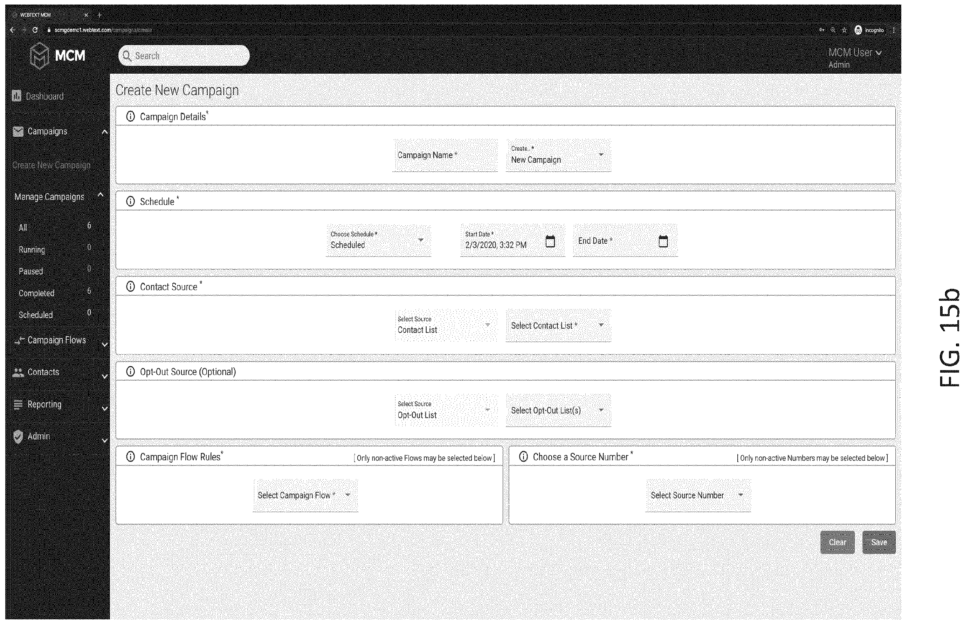

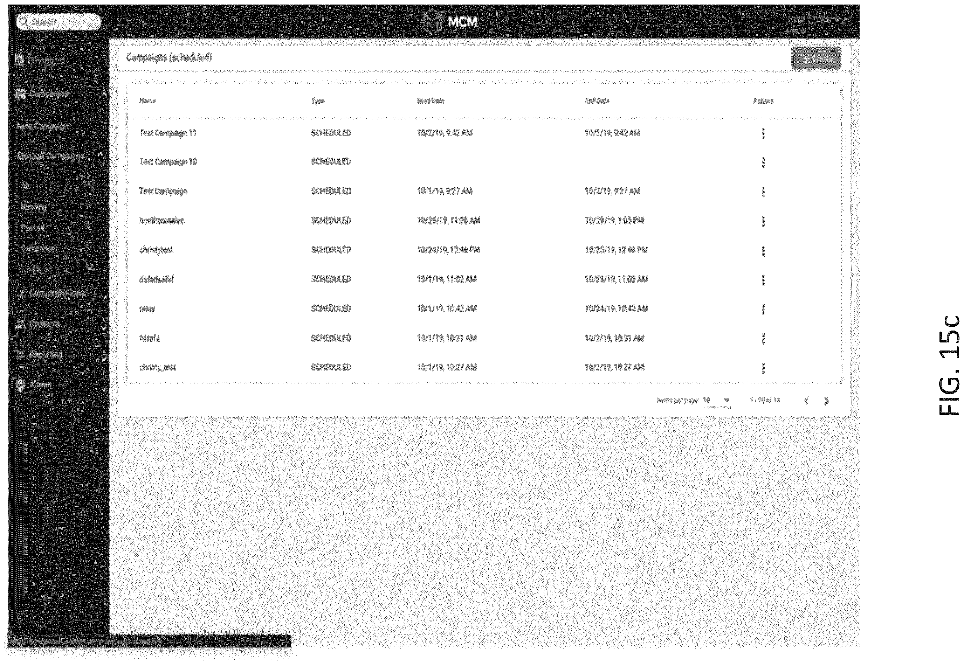

**FIG. 15** **(a to c)** shows a plurality of (non-limiting) screenshot examples of preferred interface screens according to embodiments of the present invention. Specifically, FIG. 15a shows an example of a dashboard, FIG. 15b shows an example of a campaign creation screen and FIG. 15c shows an example of a scheduling screen. These examples are for illustration only and should not be considered as limiting.

FIG. 15a, showing the dashboard according to a preferred embodiment of the present invention, comprises several screen/window areas within the interface screen template of the GUI **54c**, utilised to allow a user to monitor messaging processes of the MCM. Several areas are assigned to show the number of messages, in number format, which are categorised as inbound **55a**, outbound **55b**, pending **55c** and as a total number **55d.** Preferably, these categories are also colour coded, for example the inbound messages are here assigned the colour red. Other areas of the interface screen template **54c** are configured to show message volumes in a graphical representation **56** and recent messages in pie chart format segregated by inbound, outbound and pending status **57.** The assigned category colours are then used consistently for the graphics.

Similarly, FIG. 15b and FIG. 15c show preferred examples of a campaign creation screen, for a new campaign to be formatted and defined by the user, and a scheduling screen, for providing an overview of timings assigned to one or more campaigns, respectively. As shown in FIG. 15b, the new campaign can be created, named, time scheduled for date and time, and a contact source and campaign flow assigned. FIG. 15c shows an example of schedule listings for a variety of campaigns to be handled by a particular MCM associated with the user.

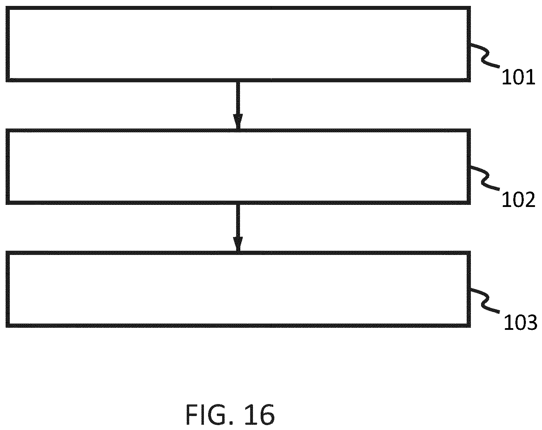

**FIG. 16** illustrates a method of bulk or mass messaging according to an embodiment of the present invention, comprising processing of an input message from a user by a MCM.

Referring now to FIG. 16, the figure shows methods steps **101** to **103**, where the steps comprise :-
(101) : receiving (36a) an input message of a user, by means of a first virtual private server (9), VPSA, of a Messaging Campaign Manager, MCM, (8a 8b 8c 8d 8e);
(102) : modifying the input message by means of a second virtual private server (10), VPSB, by :-
   routing (36b to 36g) the input message through the MCM during processing to output, by means of a handlers and controllers module (32), H&C,
   configuring a data sources connector (34), DSC, to provide the H&C module with process data, relating to the input message, from at least one source, and,
   applying at least one rule to the input message by means of a campaign manager (33), CM, comprising a rules engine (33b), RE, said RE configured to apply the at least one rule; and,
(103) : storing at least one rule for provision to the RE (33b) by means of a first database server (11), DBA, accessible (37) by the DSC (34).

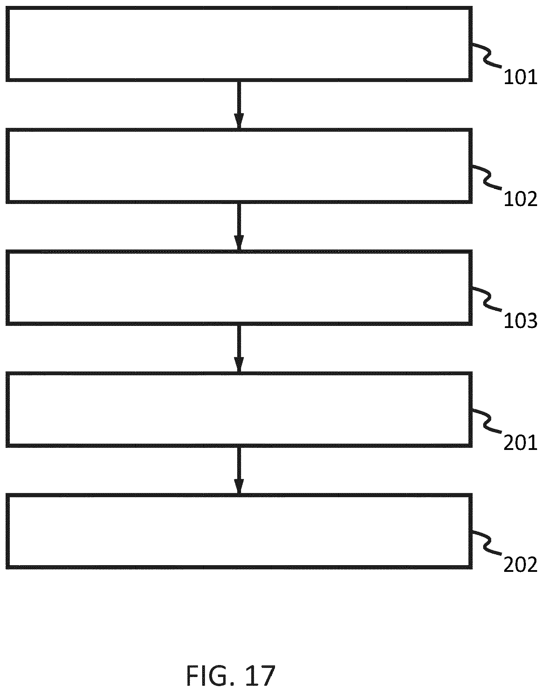

**FIG. 17** illustrates a method of bulk or mass messaging according to an embodiment of the present invention, comprising processing of an inbound message to the MCM by means of a Call Back module.

Referring now to FIG. 17, in addition to method steps **101 102 103** as outlined above, this figure shows additional method steps **201** and **202**, where said additional steps comprise :-
(201) : arranging the MCM (8a 8b 8c 8d 8e) to further comprise a call back, CB, module (35) comprised in the VPSB (10), configured capable of processing at least one inbound message to the MCM, for forwarding (38c) to the CM (33),
(202) : the CB module optionally being further configured to process at least one inbound message from a BOT (22) or human operator (23).

It is particularly advantageous in the field of bulk or mass messaging to facilitate escalation of a response to a reply from a recipient. An embodiment of the present invention, as discussed above, allows the MCM to not only direct a reply to, but also to interact with, a BOT or automated programmatic recipient of a message reply. This enables the BOT to flag or return a message which e.g. does not conform to its expected format for processing. A damaged message, a message with inappropriate content or a message with content beyond a simple response expected by the BOT, for example, can all be handled by returning the 'non-standard' message back to the MCM. Upon receipt, the MCM facilitates quick and automatic forwarding to e.g. a human operator who can deal with the message context in a more appropriate way. Or other rules can be implemented by the MCM to forward to another destination or back to the first device of the user if needed, with various formatting options available automatically by means of the MCM and MCM system. Such breadth of (MCM) response provides flexibility in the handling and escalation of reply messages which might otherwise be lost or stored waiting for inefficient manual inspection, possibly at the side of a third party to which a user (of the first device) may have no direct access.

Advantageously, the MCM and MCM system of the present invention effect, among other things :-
- Preloading of user information to MCM
- Personalisation of the original bulk message - according to rules
- Optimised use of rules - action to be taken as per (input) client instruction, including response instructions
- Output optionally via other components e.g. MTS - also reply message input via MTN.
- Output ideally SMS but expanded to MMS, FB Messenger, Twitter, WhatsApp etc.
- Facilitating reporting and billing to a user/customer as MCM specific
- Distribution of instance and/or system and scaling MCM within VPC
- Assessment of inbound message to client and options available according to rules and other components of system
- Assessment - queue
- Autonomous operation of the MCM system for pre-loaded MCMs (for optionally defined time frames)

Although embodiments of the invention are described in the foregoing, it will be appreciated that the present invention is also susceptible to being implemented in a variety of combinations of the different embodiments proposed and in various ways.

Modifications to embodiments of the invention described in the foregoing are possible without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

### LIST OF REFERENCE NUMERALS

1ab first device
2 second device
3 web or cloud-based manager
4 service provider
5abc arrows indicating message flow or trajectory
6abc arrows indicating message flow or trajectory
7 input APP (application)
8abcde MCM (messaging campaign manager)
9 input, e.g. VPSA (virtual private server A)
10 VPSB (virtual private server B)
11 DBA (database A)
12 DBB (database B)
13 BS (block or bulk storage server)
14 MCM system, inc. multiple MCM devices (or instances) and a VPC
15 VPC (virtual private cloud)
16 customisable output
17 message queue
18ab plug-in
19 arrow indicating network connection between plug-in and MCM
20 MCM system
21abc arrows indicating message flow or trajectory
22 BOT
23 human operator
24 arrow illustrating internet communication between MCM and BOT
25 arrow illustrating communication MCM and human operator
26 MTN (and specific example of inbound message module IMM in FIG. 11)
27 arrow indicating message flow or trajectory
28 MMSGW multimedia messaging gateway
29ab arrows indicating message flow or trajectory
30 SMS Dispatcher (application programming interface) API (specific example of an outbound message module OMM in FIG. 11)
31 GUI, graphical user interface
32 H&C (handlers and controllers) module
33 CM (campaign manager) module
33a APP (application)
33b RE (rules engine) module
34 DSC (data sources connector) module
35 CB (call back) module
36a to h arrows indicating a 'sending' process
37 arrow indicating data flow from and to DBA
38a to c arrows indicating a 'reply' process
39 computing apparatus
40 computer readable code
41 memory
42 processor
43 user interface
50 arrow indicating Level 1 GUI hierarchy
51 arrow indicating Level 2 GUI hierarchy
52 arrow indicating Level 3 GUI hierarchy
53 interface screen template of GUI
54a interface screen template area for banner/header
54b interface screen template area for navigation bar
54c interface screen template working area
55abcd dashboard areas showing numbers of messages inbound, outbound, pending and total, respectively
56 dashboard area showing message volumes in a graphical representation
57 dashboard area showing recent messages in pie chart format, segregated according to inbound, outbound and pending status

- 101: method step
- 102: method step
- 103: method step
- 201: method step
- 202: method step

## Claims

1. A Messaging Campaign Manager (8a 8b 8c 8d 8e), MCM, suitable for bulk or mass messaging, comprising :-
a first virtual private server (9), VPSA, configured capable of receiving (36a) an input message of a user,
a second virtual private server (10), VPSB, the VPSB comprising :-
a handlers and controllers module (32), H&C, configured to route (36b to 36g) the input message through the MCM during processing to output, and arranged cooperatively with,
a data sources connector (34), DSC, configured to provide the H&C module with process data, relating to the input message, from at least one source, and,
a campaign manager (33), CM, comprising a rules engine (33b), RE, configured to apply at least one rule to the input message, and,
a first database server (11), DBA, configured to store at least one rule for provision to the RE (33b) and arranged as accessible (37) by the DSC (34).

2. A Messaging Campaign Manager (8a 8b 8c 8d 8e) as claimed in claim 1, wherein the MCM is configured to receive the input message and/or a user instruction via a graphical user interface, GUI, (31) that is accessible via a web-portal or a front-end or client-side application (7), optionally located on a first device (1b) associated with the user,
wherein the user instruction specifies a rule applied to the input message or bulk or mass message processed by the MCM, and/or,
wherein the web-portal or the front-end or client-side application is administered or maintained by a provider of the MCM.

3. A Messaging Campaign Manager as claimed in claim 1 or claim 2, wherein the first virtual private server (9), VPSA, further comprises the graphical user interface, GUI, (31) and/or an input, configured to facilitate input of the input message or user instruction by the user, and/or wherein the first virtual private server, VPSA (9), is comprised in the second virtual private server, VSPB (10).

4. A Messaging Campaign Manager as claimed in any preceding claim, wherein the MCM (8b) further comprises :-
a second database server, DBB (12), configured to comprise a backup copy of the first database server, DBA, and/or,
a bulk storage server, BS (13), configured to store MCM data accessed for normal operations of the MCM, further comprising back-ups and/or images and/or files.

5. A Messaging Campaign Manager as claimed in any preceding claim, wherein the MCM (8c) further comprises a customisable output (16), configured for message output in at least one predetermined format.

6. A Messaging Campaign Manager as claimed in any preceding claim, wherein the MCM (8d) further comprises a message queue (17).

7. A Messaging Campaign Manager as claimed in any preceding claim, wherein the MCM (8e) further comprises at least one plug-in (18a 18b), said plug-in arranged as comprised in the MCM (18a) or configured as accessible to the MCM by network access (18b).

8. A Messaging Campaign Manager as claimed in any preceding claim, wherein the MCM (8a 8b 8c 8d 8e) further comprises a call back, CB, module (35) comprised in the second virtual private server, VPSB (10), configured capable of processing at least one inbound message to the MCM, for forwarding (38c) to the campaign manager, CM (33),
the CB module (35) optionally being further arranged to comprise parsing capability or at least one parser component, configured to inspect the at least one inbound message, and/or,
the CB module (35) optionally being further configured to process at least one inbound message from a BOT (22) or human operator (23).

9. A Messaging Campaign Manager System, MCM system (14 20), comprising one MCM (8a 8b 8c 8d 8e) or a plurality of MCMs, as claimed in any preceding claim, arranged as comprised in a virtual private cloud, VPC (15).

10. A MCM system (14 20) as claimed in claim 9, wherein the MCM system further comprises an outbound message module, OMM, (30) for forwarding (36h) of MCM output as an outbound message to at least one recipient or second device (2).

11. A MCM system (14 20) as claimed in claim 9 or claim 10, wherein the MCM system further comprises an inbound message module, IMM, for receipt (38a) of a reply message to the MCM (8a 8b 8c 8d 8e) from a recipient or second device (2) for forwarding (38b) to the call back, CB, module (35).

12. A MCM system (14 20) as claimed in claim 11, wherein the inbound message module, IMM, is arranged to comprise a message transfer node, MTN, (26).

13. A MCM system (14 20) as claimed in any one of claims 9 to 12, wherein the MCM system further comprises a multimedia messaging gateway, MMSGW, (28).

14. A MCM system (14 20) as claimed in any one of claims 9 to 13, wherein the MCM system further comprises a first device (1b), the first device comprising a graphical user interface, GUI (31), suitable for receiving input from a user of the first device for configuration of an input message to be processed by the MCM (8a 8b 8c 8d 8e) or a user instruction, wherein the graphical user interface, GUI, is accessible via a web-portal or a front-end or client-side application, and/or,
wherein the user instruction specifies a rule applied to the outbound message or bulk or mass message(s) processed by the MCM system, and/or,
wherein the web-portal or the front-end or client-side application is administered or maintained by a provider of the MCM system.

15. A bulk or mass messaging system comprising at least one MCM (8a 8b 8c 8d 8e) as claimed in claims 1 to 8 or at least one MCM system (14 20) as claimed in claims 9 to 14.

16. A method of bulk or mass messaging, comprising the steps of :-
(101) receiving (36a) an input message of a user, by means of a first virtual private server (9), VPSA, of a Messaging Campaign Manager, MCM, (8a 8b 8c 8d 8e);
(102) modifying the input message by means of a second virtual private server (10), VPSB, by :-
routing (36b to 36g) the input message through the MCM during processing to output, by means of a handlers and controllers module (32), H&C,
configuring a data sources connector (34), DSC, to provide the H&C module with process data, relating to the input message, from at least one source, and,
applying at least one rule to the input message by means of a campaign manager (33), CM, comprising a rules engine (33b), RE, said RE configured to apply the at least one rule; and,
(103) storing at least one rule for provision to the RE (33b) by means of a first database server (11), DBA, accessible (37) by the DSC (34).

17. A method of bulk or mass messaging as claimed in claim 16, further comprising the step of :-
configuring the MCM to receive the input message and/or a user instruction via a graphical user interface, GUI, (31) that is accessible via a web-portal or a front-end or client-side application (7), optionally located on a first device (1b) associated with the user,
wherein the user instruction specifies a rule applied to the input message or bulk or mass message processed by the MCM, and/or,
wherein the web-portal or the front-end or client-side application is administered or maintained by a provider of the MCM.

18. A method of bulk or mass messaging as claimed in claim 16 or claim 17, further comprising the step of :-
arranging the first virtual private server (9), VPSA, to comprise the graphical user interface, GUI, (31) and/or an input, configured to facilitate input of the input message or user instruction by the user and/or wherein the first virtual private server, VPSA (9), is comprised in the second virtual private server, VSPB (10).

19. A method of bulk or mass messaging as claimed in claims 16 to 18, further comprising the steps of :-
providing a second database server, DBB (12), configured to comprise a backup copy of the first database server, DBA, and/or,
providing a bulk storage server, BS (13), configured to store MCM data accessed for normal operations of the MCM, further comprising back-ups and/or images and/or files.

20. A method of bulk or mass messaging as claimed in claims 16 to 19, further comprising the step of :-
outputting an outbound message from the MCM in at least one predetermined format, by providing the MCM (8c) with a customisable output (16) configured for message output in the at least one predetermined format.

21. A method of bulk or mass messaging as claimed in claims 16 to 20, further comprising the step of :-
providing the MCM (8d) with a message queue (17).

22. A method of bulk or mass messaging as claimed in claims 16 to 21, further comprising the step of :-
arranging the MCM (8e) to further comprise at least one plug-in (18a 18b), said plug-in arranged as comprised in the MCM (18a) or configured as accessible to the MCM by network access (18b).

23. A method of bulk or mass messaging as claimed in claims 16 to 22, further comprising the step of :-
(201) processing at least one inbound message to the MCM, for forwarding (38c) to the campaign manager, CM (33), by arranging the MCM (8a 8b 8c 8d 8e) to further comprise a call back, CB, module (35) comprised in the second virtual private server, VPSB (10),
the CB module (35) optionally being further arranged to comprise parsing capability or at least one parser component, configured to inspect the at least one inbound message, and/or,
(202) the CB module (35) optionally being further configured to process at least one inbound message from a BOT (22) or human operator (23).

24. A method of bulk or mass messaging as claimed in claims 16 to 23, further comprising the step of :-
arranging a virtual private cloud, VPC, (15) to comprise one MCM (8a 8b 8c 8d 8e) or a plurality of MCMs.

25. A method of bulk or mass messaging as claimed in claim 24, further comprising at least one of the step(s) of :-
forwarding (36h) MCM output as an outbound message to at least one recipient or second device (2), by means of an outbound message module, OMM, (30); and/or,
receiving (38a) a reply message to the MCM (8a 8b 8c 8d 8e) from a recipient or second device (2) for forwarding to the call back, CB, module (35), by means of an inbound message module, IMM, said inbound message module, IMM, optionally comprising a message transfer node, MTN, (26).

26. A computer program comprising instructions which, when the program is executed by a computer (39), cause the computer to carry out the steps of the method of claims 16 to 25.

27. A computer-readable medium comprising instruction which, when executed by a computer (39), cause the computer to carry out the steps of the method of claims 16 to 25.

28. A graphical user interface (31), displayed on a computer screen of a first device (1b), for receiving user input, suitable for configuration of a bulk message by a MCM (8a 8b 8c 8d 8e), said graphical user interface comprising :-
at least a first region, said first region, upon activation, performing an action associated with receiving the user input suitable for configuration of the bulk message; and,
a second region, said second region, upon activation, performing an action associated with the sending of the user input to the MCM; and/or,
a third region, said third region, upon activation, performing an action of displaying reply messages and/or status information and/or process data obtained from the MCM.
